# EUROPEAN PATENT APPLICATION

(11) **EP 1 189 473 A2**
(43) Date of publication of application: **20.03.2002**
(21) Application number: 01307836.5
(22) Date of filing: 14.09.2001
(51) Int. Cl.: H04Q 7/38

(54) **Prepaid mobile communcations services using signalling transfer point**

(30) Priority: 15.09.2000 US 662541; 15.09.2000 US 662542; 15.09.2000 US 662543; 15.09.2000 US 663367; 15.09.2000 US 663389
(71) Applicant: Comverse Inc., Wakefield, MA 01880 (US)
(72) Inventor: Haas, Irwin Mark, Mount Laurel, New Jersey 08054 (US); Haran, Dan, Medford, New Jersey 08055 (US)
(74) Representative: Skone James, Robert Edmund

(57) **Abstract**

A signaling relay point (SRP) facilitates providing a mobile communications service to a prepaid mobile station under a selected condition, such as when the prepaid mobile station is roaming outside its home mobile network. The signaling relay point is disposed at a threshold point of a home location register (HLR) of the home mobile network. A visitor location register (VLR), associated with a switching point at which the prepaid mobile station is registering, sends a location update message to the home location register. At the threshold point, the signaling relay point (SRP) intercepts the location update message and extracts data identifying the prepaid mobile station and a visited mobile network comprising the serving switching point. The signaling relay point (SRP) determines whether the prepaid mobile station is roaming, based on the network identifying data. If the prepaid mobile station is roaming, the signaling relay point (SRP) intercepts and modifies a subscriber data insertion message sent from the home location register toward the visitor location register. The signaling relay point inserts forced routing data into the subscriber data insertion message. The forced routing data instructs the serving switching point to route calls originating from the prepaid mobile station in the visited mobile network through a specified gateway. The specified gateway receives call control instructions from a service node in communication with a prepaid service accounting system in the home mobile network. If prepaid roaming is not permitted in the visited mobile network, the signaling relay point rejects the location update message.

## Description

The present invention relates to prepaid Mobile communication services.

The present invention relates to providing services in mobile telecommunications systems, such as mobile telephone systems. In particular, the present invention relates to systems and methods for providing prepaid services in a mobile telecommunications network, such prepaid services being implemented by a signaling relay point that enables provisioning of enhanced services such as user services that were previously difficult or impossible to provide. In a particular embodiment, a signaling relay point of the present invention is used to implement a prepaid mobile telecommunications service that permits roaming.

In the current global climate of telecommunications deregulation, users of mobile telecommunications services can choose from a growing number of competing service providers. The ability of mobile service providers to offer subscribers additional, value-added services is increasingly important, because service providers need better ways to differentiate themselves from their competitors. However, the high cost of modifying existing elements of network infrastructure presently poses a serious obstacle to most approaches for offering new services. Any such modifications also tend to create at least temporary risks for the quality of existing services, because new or enhanced network elements must be installed in the network and qualified for service.

To be a practical alternative for telecom operators, therefore, any new service should avoid substantially increasing the processing load on critical signaling points in the mobile network. A related requirement is to minimize the additional volume of message traffic that a new service will impose on the network. Further, any new service offering should not require substantial upgrades (e.g., IN upgrades, additional service software, etc.) to the existing network elements.

Heretofore various approaches have been proposed to provide new or enhanced services to mobile system subscribers. Unfortunately, almost all such proposals have failed to meet one or more of the foregoing practical restrictions. The resulting costs have tended to discourage mobile service providers from implementing a wider range of additional services, even when such services are known to be highly valued by existing and potential subscribers.

The potential competitive advantage of an improvement in mobile service is particularly great when the service improvement responds to a specific consumer need or preference that has been observed among current or potential subscribers. For example, many mobile providers presently offer prepaid service plans. These prepaid mobile plans allow fees for mobile services used by a subscriber to be debited from an account balance established by an advance payment from the subscriber.

Many potential subscribers find that prepaid mobile service allows direct control over expenses incurred for mobile telecommunications services. The service provider will suspend service for the prepaid subscriber when the subscriber's prepaid account balance falls to zero (or falls below some predetermined minimum service amount). The subscriber can therefore control her ongoing expenses for mobile telecom services by controlling the amounts she advances to the prepaid account balance.

Prepaid mobile service is thus a potentially valuable service option for attracting new subscribers. Unfortunately, as explained below, the existing approaches for implementing prepaid mobile service plans have significant drawbacks. Prepaid services have therefore had limited consumer appeal, and the potential benefits to consumers and service providers have been largely unrealized.

From the service provider's point of view, the feasibility of providing a prepaid mobile depends on being able to control each service connection for a prepaid subscriber according to the subscriber's current account balance. Two main approaches have been used. A server-based technique uses an accounting server to provide real-time account information, over a data network, to a serving mobile switch (MSC). The MSC then refuses to establish a service connection to the subscriber, or breaks an existing connection, when the subscriber's account balance falls too low.

The server approach has worked well in the home network, but has been less successful for continuing prepaid mobile service when the mobile subscriber roams. The basic problem has been that the serving MSC must control the prepaid service connection according to account data from the server. The service provider can configure the home network to provide the network MSCs with the required data inputs and instruction sets. However, generally the necessary data and connection control are unavailable when the prepaid subscriber roams outside the home network.

Some workarounds have been attempted in IS-41 networks (primarily in the United States), such as hotlining and unregistered roamer techniques. These approaches have generally imposed awkward additional dialing requirements and limitations on the prepaid subscribers. Moreover, no workarounds are available for GSM networks. The consequence has been that most mobile service providers have been unable to offer roaming service to prepaid subscribers.

More recently, so-called "smart phone" technology has been proposed as an alternative approach for providing prepaid mobile service. The basic idea is to perform the necessary account balance monitoring and connection control functions using hardware elements installed in the mobile station, rather than relying on the serving MSC and a distant server. U.S. Patent 5,577,100, issued to McGregor et al., discloses a version of this approach in which a billing program and an account balance are stored in secure format in memory within the mobile station. The account balance can be increased by prepayment at appropriate payment stations, either through cash, credit card, or prepaid phone card. In another version, disclosed in U.S. Patent 5,915,226 to Martineau, the mobile station is itself configured to accept a prepaid smart card that stores the prepaid account balance.

The smart phone approach overcomes some weaknesses of server-based accounting, but in the process other weaknesses are created. For example, storing specific tariffs for multiple service areas would require too much on-board memory. Tariffs can also change frequently, and such changes would require frequent memory updates on a phone-by-phone basis. Hence, the on-board accounting program generally is either unable to compute charges using specific tariffs or else must obtain tariff data from the visited network. In the latter case, of course, the visited network must be capable of downloading the necessary tariff data to the mobile station.

Another concern over smart phones arises from the fact that each prepaid account balance represents a service obligation on the part of the service provider. When a centralized accounting server manages the prepaid account information, the provider's commitment to prepaid subscribers can be determined easily. However, when account balances are maintained on board the prepaid mobile stations, the provider has little ability to track its commitments. Only intermittent tracking is possible, and only by an expensive and awkward process of regularly polling account information from each individual mobile station.

A further weakness of smart phones arises because the viability of prepaid mobile services depends on the integrity of the prepaid subscriber's account balance. In a smart phone system the balance is actually stored in the smart phone handset, which is in the physical possession of the subscriber. Usually the balance information is protected by a security algorithm against tampering. A real concern with this approach that the security algorithm may be broken, thereby subjecting the entire system (or at least the subscriber's account) to fraud. It is known that such security breaks have occurred at least twice with SIM-based prepaid systems in the GSM world. As various public challenges have shown, the current generation of encryption algorithms is far from unbreakable. Unless and until better security mechanisms are developed, prepaid services based on smart phone technology will be unavoidably subject to this risk of fraud.

Therefore, a clear need exists for new technology to allow mobile service providers to offer a broad range of additional services with greater flexibility and less risk and expense. Such new technology desirably should allow a subscriber to use a selected service, whether the subscriber is located in the home network or is roaming. User-transparent roaming service for prepaid mobile accounts, while maintaining centralized control over account information, would be highly desirable.

Ideally, a new mobile service technology would be easily configured, at the option of the service provider, to support a broad range of value-added services including new services heretofore unfeasible to implement by any means. The ideal new technology would thus significantly extend the range and flexibility of available service options and would do so without significant additional cost or risk to the mobile service provider's existing service base.

### SUMMARY OF THE INVENTION

It is an object of the present invention to provide a mobile telecommunications service technology that will solve the aforementioned problems and meet the aforementioned needs. The invention also has numerous additional objects and advantages that will in part be set forth in the following description and will in part be apparent from the description or discernable by practice of the invention.

The present invention provides, in a first aspect, a method, apparatus, system, and software for a prepaid mobile telecommunications service. A method of this first aspect comprises determining supplemental information based on data extracted from a message intercepted at a threshold point of a home location register. Service processing is performed to carry out a service for a prepaid mobile station, the service processing comprising supplemental service processing based on the supplemental information.

In a second aspect, the invention provides a method, apparatus, system, and software for a prepaid mobile communication service. A method of this second aspect comprises determining a roaming status for a prepaid mobile station based on data extracted from a message intercepted at a threshold point of a home location register. A mobile communication for the prepaid mobile station is routed through a specified signaling point to a switching point serving the prepaid mobile station, when the roaming status indicates the prepaid mobile station is roaming.

In a third aspect, the invention provides a method, apparatus, system, and software for a mobile subscriber prepaid service. A method of this third aspect comprises routing a mobile communication for a prepaid mobile station through a specified signaling point to a switching point serving the prepaid mobile station, when a roaming status indicates the prepaid mobile station is roaming. A connection for the mobile communication is released responsive to a determination that an account balance for the prepaid mobile station is less than a predetermined minimum balance value.

In a fourth aspect, the invention provides a method, apparatus, system, and software for a prepaid mobile telecommunications service. A method of this fourth aspect comprises intercepting a location update message from a visited mobile service center at a threshold point of a home location register in a home network of a prepaid mobile station, the location update message indicating a request from the prepaid mobile station for service registration at the visited mobile service center. Identification data are extracted from the intercepted message, the identification data representing a unique identifier assigned to the prepaid mobile station. Address data are extracted from the intercepted message, the address data indicating a message address for the visited mobile service center. A roaming status is determined for the prepaid mobile station based on the address data. A service status is determined based on the address data, the service status indicating whether service registration is permitted for the prepaid mobile station at the visited mobile service center.

A subscriber data insertion message directed to the visited mobile service center is intercepted at the threshold of the home location register when service registration is permitted for the prepaid mobile station at the visited mobile service center and the roaming status indicates the prepaid mobile station is roaming while registered for service at the visited mobile service center. The subscriber data insertion message is modified to include therein data indicating an instruction for the visited mobile service center to route mobile communications for the prepaid mobile station through a selected signaling point in the mobile network of the visited mobile service center when the subscriber data insertion message is intercepted, the selected signaling point executing a call control procedure responsive to call control instructions communicated from a prepaid accounting system in the home network.

A routing message from a gateway mobile service center is intercepted at a threshold point of the home location register in the home network and a called party number is extracted therefrom, the routing message indicating a request for a routing instruction for routing an incoming mobile communication to the prepaid mobile station. It is determined, based on the called party number and the service status, whether the mobile communication is permitted for the prepaid mobile station. The intercepted routing message is relayed to the home location register.

An acknowledgement message responsive to the routing message is intercepted at a threshold of the home location register when the mobile communication is not permitted for the prepaid mobile station, the acknowledgement message returning to the gateway mobile service center from the home location register and containing a mobile station routing number currently assigned by a currently serving mobile switching center to the prepaid mobile station. The intercepted acknowledgement message is modified to replace the mobile station routing number with a selected routing number for a selected one of a voicemail service system for a subscriber corresponding to the prepaid mobile station and an interactive voice response system providing an error message, when the mobile communication is not permitted for the prepaid mobile station. The acknowledgement message is relayed to the gateway mobile service center when the acknowledgement message has been intercepted and the mobile station routing number has been replaced with the selected routing number. The acknowledgement message is returned to the gateway mobile switching center without modification to the mobile station routing number, when the mobile communication is permitted for the prepaid mobile station.

In a fifth aspect, the invention provides a method, apparatus, system, and software for a prepaid mobile telecommunications service. A method of this fifth aspect comprises intercepting a location update message from a visited mobile service center at a threshold point of a home location register in a home network of a prepaid mobile station, the location update message indicating a request from the prepaid mobile station for service registration at the visited mobile service center. Identification data are extracted from the intercepted message, the identification data representing a unique identifier assigned to the prepaid mobile station. Address data are extracted from the intercepted message, the address data indicating a message address for the visited mobile service center. A roaming status is determined for the prepaid mobile station based on the address data. A service status is determined based on the address data, the service status indicating whether service registration is permitted for the prepaid mobile station at the visited mobile service center.

A subscriber data insertion message directed to the visited mobile service center is intercepted at the threshold of the home location register when service registration is permitted for the prepaid mobile station at the visited mobile service center and the roaming status indicates the prepaid mobile station is roaming while registered for service at the visited mobile service center. The subscriber data insertion message is modified to include therein data indicating an instruction for the visited mobile service center to route mobile communications for the prepaid mobile station through a selected signaling point in the mobile network of the visited mobile service center when the subscriber data insertion message is intercepted, the selected signaling point executing a call control procedure responsive to call control instructions communicated from a prepaid accounting system in the home network.

A communication from the selected signaling point may then be receiving at the prepaid accounting system, the communication indicating the prepaid mobile station has requested to initiate a mobile communication. It is determined whether the requested mobile communication is permitted based on an account balance corresponding to the prepaid mobile station. A communication is established through a data network connection between the prepaid accounting system and the specified signaling point responsive to the received communication, when the requested mobile communication is permitted. The specified signaling point is instructed through the data network communication to terminate the requested mobile station when the prepaid accounting system determines that the account balance has been reduced to less than a predetermined minimum balance amount.

Further features and advantages of the present invention, as well as the structure and operation of various embodiments of the present invention, will become apparent and more readily appreciated from the following description of the preferred embodiments, taken in conjunction with the accompanying drawings of which:
FIG. 1 is a schematic illustration of the general telecommunications environment including a typical mobile telecommunications network;
FIG. 2 shows the mobile network of FIG. 1 together with a second mobile network and a public switched telephone network;
FIG. 3 is message sequence diagram illustrating a message flow for autonomous registration and call routing for the mobile networks of FIGS. 1-2;
FIG. 4 shows a portion of the mobile network of FIG. 1, together with a signaling relay point with which the services of the present invention may be implemented;
FIG. 5 is a schematic illustration of a mobile telecommunications network supporting prepaid mobile services;
FIG. 6 shows the mobile network of FIG. 5 as a home mobile network together with another mobile network;
FIG. 7 shows a configuration of the mobile networks of FIG. 6 in which the other mobile network comprises a service node;
FIG. 8 shows the mobile networks of FIG. 7 in which the home mobile network comprises a signaling relay point of the present invention;
FIG. 9 is a flow diagram illustrating operations comprised in a location update procedure of the present invention;
FIG. 10 is a flow diagram illustrating operations comprised in a procedure of the present invention for modification of a subscriber data insertion message;
FIG. 11 is a flow diagram illustrating a procedure of the present invention for capture of mobile terminated calls for a prepaid mobile station; and
FIG. 12 is a flow diagram illustrating a procedure of the present invention for forced routing of a mobile originated call for a prepaid mobile station.

Reference will now be made in detail to the presently preferred embodiments of the invention, examples of which are illustrated in the accompanying drawings, wherein like reference numerals refer to like elements throughout.

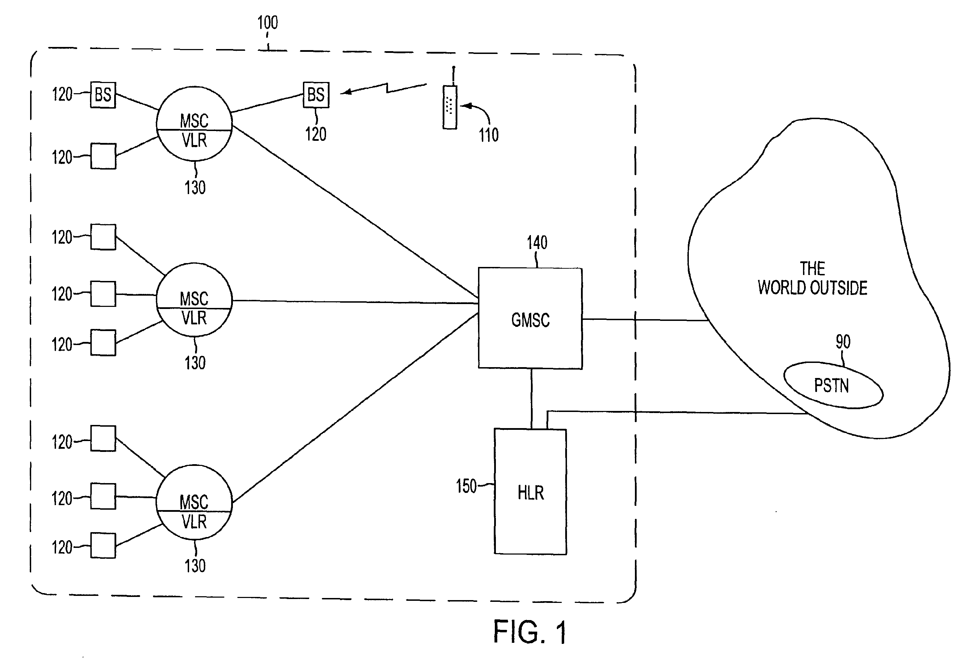

FIG. 1 illustrates the network interconnection between the general telecommunications "world," including a Public Switched Telephone Network (PSTN) 90, and a typical mobile telecommunications network 100. Mobile network 100 may be a Public Mobile Land Network (PMLN) or any similar network for mobile telecommunications. The present invention may be implemented to advantage in any such mobile network. Typically the mobile communications supported by such a mobile network 100 will be voice communications, i.e., mobile telephone calls. However, those of skill in the art will appreciate that the present invention applies equally well to other types of mobile communications as well, such as Short Message Service (SMS) communications, mobile data communications (e.g., "wireless Internet"), etc.

The term "mobile communication" will therefore apply to all communications in such mobile networks or using such mobile telecommunications modalities. A mobile communication may originate at a mobile station, or terminate at a mobile station, or both. In the following description the term "call" will often be used interchangeably with "mobile communication" to mean any of the applicable types of mobile telecommunications. However, when the context distinguishes between "call" and communication, a "call" will be a conventional voice telephony communication.

Mobile network 100 is typically operated by a mobile service provider (MSP) (not shown), which provides home network services to a number of mobile stations (usually many) such as mobile station (MS) 110. Generally, these home network services provide MS 110 with dial tone service whenever MS 110 is located within the geographical coverage area of mobile network 100. Here "dial tone service" means basic mobile communications service, whereby a subscriber (not shown) is able to call out and to answer incoming calls (i.e., to initiate outgoing communications and to receive incoming communications) using the MS 110.

Network 100 further comprises a number of mobile switching centers 130, each of which serves as a switching center for a number of base stations 120. BS 120 and MSC 130 communicate over a suitable data link, as is well known in the art. Each mobile switching center (MSC) 130 thus provides switching services for mobile stations located within the geographical area covered by the base stations 120 assigned to the MSC 130. A mobile communication between MS 110 and another terminal (not shown) is conducted in the first instance through a BS 120 that conducts the communication through radio transmissions to and from MS 110.

Each mobile service center 130 comprises or is coupled to a visitor location register (VLR) that stores certain subscriber information needed or useful for servicing the mobile stations located in the coverage area of the MSC 130. Each MSC 130 will alternatively be referenced as an "MSC/VLR," in view of the close association between each MSC and the associated VLR.

If the subscriber operating MS 110 engages in a mobile communication with another terminal outside mobile network 100, then a suitable communication channel (e.g., a voice channel) is established between the serving MSC/VLR 130 and a gateway MSC (GMSC) 140 (unless, of course, the serving MSC and the gateway MSC are the same entity). The communication channel then extends from the GMSC 140 to other appropriate switching points (not shown) in the world outside network 100, perhaps through PSTN 90. Typically a mobile network may comprise several gateway MSCs, but for simplicity only GMSC 140 is shown in FIG. 1. In the typical case, all the MSC/VLR units are connected on the signaling network to the HLR (or HLRs, if the mobile network comprises multiple HLRs).

It is noted that the FIGURES of this application illustrate the GMSCs as entities distinct from the regular MSCs. This distinction is made in the FIGURES for purposes of explaining the somewhat different functional roles played by the gateways and the regular MSCs in the present invention. However, in a typical network a GMSC is just another MSC that happens to have connections to one or more signaling points outside the mobile network. Indeed, in some mobile networks all the MSCs are also GMSCs.

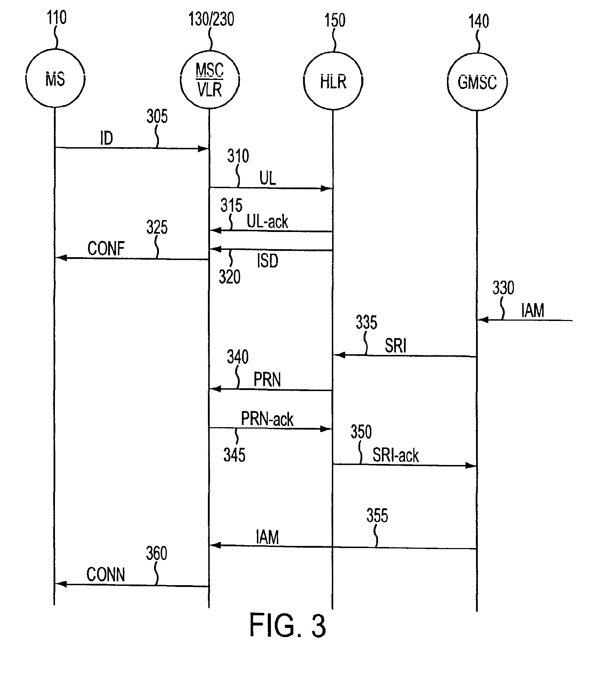

Mobile network 100 further comprises a home location register (HLR) 150, which is a database for subscriber information relating to mobile stations receiving home network services from mobile network 100. As depicted in FIG. 1, the HLR 150 is a centralized database for the exemplary network 100. However, frequently a mobile network operator will maintain several HLRs in a mobile network, with each HLR having a number of mobile stations uniquely assigned thereto. In the extreme case, as was used in early wireless systems in the United States and still exists in some networks, each MSC of the network may have an HLR database embedded therein. Again, mobile network 100 is depicted in FIG. 1 with a single HLR 150 to simplify the following exposition. The HLR 150 typically maintains data relating to the service plan associated with MS 110 and current routing data, as will be explained below with reference to FIG. 3.

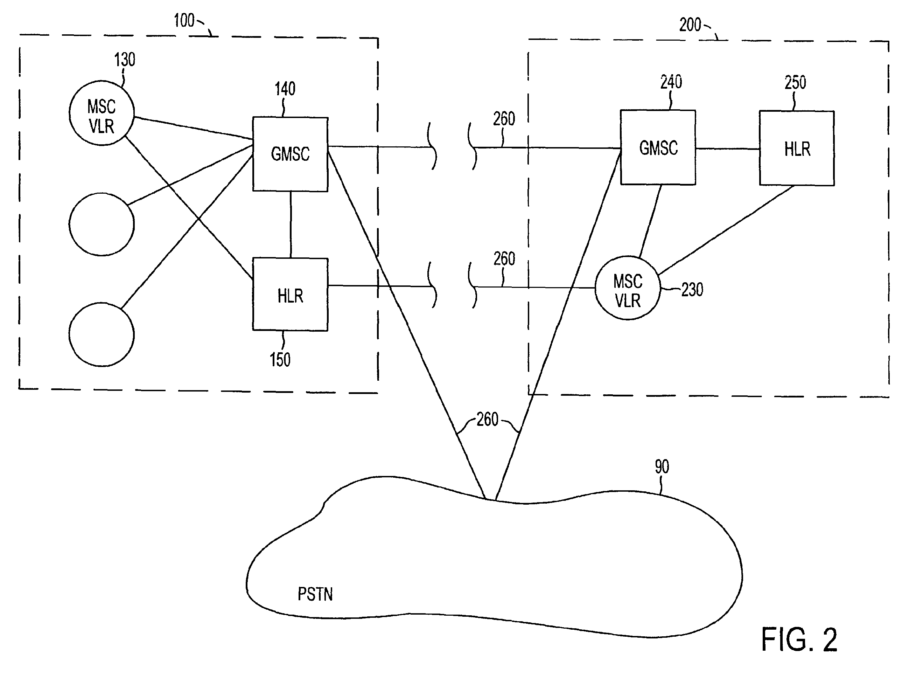

FIG. 2 illustrates the mobile network 100 of FIG. 1, together with another mobile network 200 that may be operated by a different MSP. Mobile network 200 as illustrated comprises elements similar to the elements of network 100. Like network 100, mobile network 200 comprises several MSC/VLRs 230 (only one shown), a GMSC 240, and an HLR 250.

Network 100 and network 200 are linked together by signaling links 260, which transmit control signals for providing communication services between the two networks. Typically these control signals conform to a standard, message-oriented signaling protocol, such as IS-41 or GSM MAP over Signaling System 7 (SS7). Further links 260 couple the mobile networks 100 and 200 to the PSTN 90 to provide comprehensive telecommunications service to users of the mobile networks. Telecommunications networks such as PSTN 90 and mobile networks 100 and 200 will typically comprise many more signaling links and signaling elements than the links and elements shown for purposes of illustration in FIG. 2.

FIG. 3 illustrates a typical configuration of message flow for the basic messages used in autonomous registration of a mobile station in a mobile network. Autonomous registration (or "registration") is a well known process by which service arrangements are established when a mobile station enters or first powers up in the service area of a mobile service center. Two conventional purposes are achieved by registration: first, the signaling address of the serving MSC/VLR is identified to the HLR to which the mobile station is assigned. This allows incoming calls to the mobile station to be routed to the correct MSC/VLR. Second, subscriber-specific data is downloaded from the HLR to the serving VLR to facilitate mobile communications for the mobile station. Such downloaded data enable the serving MSC/VLR to provide more extensive services and may include, for example, a call forwarding number.

The registration process proceeds in a manner now to be described with reference to FIG. 3 and the MS 110 of FIG. 1. The operations to carry out such a process include transfers of information between various signaling points. These transfers occur by representing relevant messages in physical signals that are transmitted between signaling points involved in the various operations of the procedure. Many signaling formats can be used for these physical transfers, and the present invention does not require signaling according to any particular signal format. The successful execution of the various functions of the mobile network depends on the functions of the messages, rather than the particular form in which the messages are transmitted.

This detailed description will therefore use "signal" and "message" interchangeably unless the context clearly indicates otherwise. Further, specific signal types will be discussed here in terms of the ISUP terminology (e.g., IAM) and the GSM terminology (e.g., UL, ISD, SRI, PRN, etc.). These specific signal types are used here as examples only and are not necessary for the invention.

With reference now to FIG. 3, when the MS 110 first powers up or enters the MSC service area, an identification signal 305 is sent to the serving MSC/VLR 130 (or MSC/VLR 230). This ID signal contains the unique identification number of the MS 110. For example, in GSM the identification number may be the International Mobile Subscriber Identity (IMSI) number. For incoming calls, the MS 110 is specified by an associated directory number, designated the Mobile Subscriber Integrated Services Digital Network (MSISDN) number in GSM networks. Equivalently, in IS-41 networks the corresponding numbers are the Electronic Serial Number (ESN) and the Mobile Subscriber Number (MSN) or Mobile Directory Number (MDN), respectively.

Using the MS ID number, the MSC 130 sends a location update signal (UL) 310 to the HLR 150. In GSM networks the UL signal 310 will be the GSM Update Location signal. The corresponding signals for IS-41 and other signaling protocols will be apparent to those of skill in the art.

The HLR 150 returns an acknowledgement signal (UL_ack) 315 to the MSC/VLR 130 (or 230) and then retrieves the appropriate subscriber data to be forwarded to the serving VLR. The data is encapsulated in a subscriber data insertion signal (ISD) 320 and sent to the MSC/VLR 130/230. The serving VLR stores the data, and a confirmation signal (CONF) 325 is sent to the MS 110 to complete the registration process.

FIG. 3 further illustrates message flows when an incoming mobile communication (such as a telephone call) is directed toward the MS 110. The dialed directory number (CdPN), which is generally the MSN or MDN for the MS 110 in the case of an IS-41 network, or the MSISDN in a GSM network, provides a routing instruction that routes a call setup request message (IAM) 330 to the GMSC 140 to which the MS 110 is assigned. The GMSC 140 initiates a routing instruction request message (SRI) 335 to the HLR 150, thereby to obtain a routing instruction for the currently serving MSC.

Because the MS 110 previously registered at MSC/VLR 130 (or 230), the HLR 150 initiates a routing number request message (PRN) 340 toward the serving MSC/VLR. The MSC/VLR 130/230 sends an acknowledgement message (PRN_ack) 345 to the HLR 150. The PRN_ack message contains a routing number (RN) that allows the IAM message to be routed to the correct MSC and identified with the correct mobile station upon arrival.

The HLR 150 receives the PRN_ack message from the MSC/VLR 130/230 and encapsulates the RN in an acknowledgement signal (SRI_ack) that is sent to the GMSC 140 as a response to the SRI message. The GMSC 140 then routes the IAM message to the correct MSC 130/230 for completion of the call connection (assuming the dialed subscriber is available to take the call).

The present invention embodies novel and unusual concepts for efficiently using basic network messages to provide services heretofore difficult or impossible to implement in mobile networks such as mobile network 100. Some similar services have been proposed in the past, but only at the expense of substantial modifications to the network switches and the HLR, or the addition of intelligent network (IN) capabilities to the network, or both. The present invention enables new and enhanced services to be provided without such expensive and risky modifications to the existing network infrastructure.

The basic control messages ("messages") with which the invention is concerned are used in virtually every mobile network, such as mobile network 100, for carrying out network operations such as the registration process outlined above. The invention uses such messages *in situ*, that is, as they occur in ordinary network operations. With the invention, these services do not require new message formats or new message types, and do not require modifications to the existing network elements (switching centers, HLRs, VLRs, etc.). These advantages remove significant cost and reliability issues that heretofore have discouraged service providers from implementing new and enhanced services. In fact, the service potential offered by this new approach extends to non-subscriber services as well, such as administrative services for the network provider (accounting, service utilization monitoring, etc.).

Such advantages and benefits may be realized through a novel approach to message interception, whereby new information is obtained from the intercepted message. A further notable aspect of the invention resides in a synergistic combination of this new approach to message interception and supplemental processing based on the new information. Here "message interception" means an operation in which a message addressed to a given destination signaling point is received at a network point along the signaling path between the source signaling point and the destination signaling point. This is to be distinguished from simple message routing, by which the message hops from point to point along a route to the specified destination. Message interception entails the further operation of extracting data from the message, which makes possible further processing of the message in view of the extracted data. For example, the message may be relayed without change, modified or supplemented according to the extracted data before being relayed, or even suppressed entirely.

Message interception and data extraction have been known to provide certain useful capabilities. Here, however, the present invention makes use of at least two basic and interrelated new discoveries. First, it has been discovered that new, independently meaningful information may be determined from appropriate analysis of data extracted from a message. Effective use of this first discovery, however, has depended upon a second discovery: that the circumstances of the message interception can have a critical effect on the kind and amount of information that can be obtained through message interception. A related discovery is that the circumstances under which the new information is used can enhance the effectiveness of additional service functions that use the new information.

Each of these discoveries has considerable significance for mobile telecommunications services, even apart from the others. However, when considered in combination, the features of the invention have implications extending far beyond their individual significance. Some of the novel and unusual aspects of the invention arising from the interactions between the various discoveries thereof may be better understood through a brief consideration of existing uses for message interception.

Conventional embodiments of message interception in telecom signaling networks have embodied a content substitution paradigm, i.e., "match and switch." This content substitution generally proceeds according to the following lines: extract a certain data field from the intercepted message, compare the extracted data to a relevant template or trigger condition, and substitute appropriate data for the extracted data when a match occurs. Typical examples of content substitution are query format translation for database queries (see, e.g., European Patent Application 0 669 771 A1) and called party number substitution (or global title translation) for local number portability (see, e.g., U.S. Patents 5,905,724, 5,940,492, and 5,949,871).

U.S. Patent 5,943,619 discloses a related embodiment of content substitution wherein a home network HLR provides subscriber data for a mobile station roaming in a visited network. A substitution device in the visited network is configured to receive the subscriber data message entering the visited network and to supplement the original subscriber data with additional subscriber data suitable for the visited network. The additional subscriber data may be selected in accordance with the identity of the originating HLR, or the identity of the registering mobile station, or both. The substitution operation is again a "match and switch" procedure. A corresponding, supplemental subscriber data message (equivalently, a modified version of the received message) is then sent to the MSC currently serving the roaming MS. The visited MSC is identified based on the fact that the location update message to which the data insertion message responds was previously sent to the HLR by the visited MSC.

These examples illustrate how conventional message interception uses message data as a search key to identify appropriate data (such as replacement data or additional data) to be inserted into the message. The data extracted from an intercepted message has thus been recognized as an identifier for an appropriate, predefined operation for modifying (or suppressing) the message. This basic approach takes a few common forms, as illustrated by the aforementioned patents. For example, the routing number may be swapped using an LNP database, whereby the message is routed to a new end office switch to which the called party number has been ported. Alternatively, the destination point code (DPC) may be swapped by reference to a ported-number database, whereby the message is routed to an IN service node for appropriate service processing. The message processing may provide subscriber data substitution, whereby data carried by the message is modified or supplemented from a predetermined data register. In each of these embodiments, data extracted from the message itself identifies a predetermined operation affecting the data in the message.

Message interception can also be used to implement Mobile Number Portability (MNP) in the mobile network context. The basic problem of MNP parallels the LNP problem for wireline networks: when a subscriber changes mobile service providers but keeps her old directory number, any incoming calls will be routed initially to the donor network. In both contexts, the number portability task is to redirect the call setup request to the new network providing service to the called subscriber.

To implement MNP, the interception device can be configured to intercept the SRI message from the GMSC and to determine, by a look up in a Number Portability ("NP") database, whether the CdPN has been ported. If the CdPN is determined to have been ported from the donor HLR, then the interceptor does not relay the SRI message to the HLR (i.e., performs suppression). The interceptor can then initiate a response message, such as an SRI_ack message, corresponding to the SRI message and redirecting the call setup request to the new HLR. In this formulation, "message interception" entails generating a corresponding response and suppressing the intercepted message, instead of relaying the intercepted message.

Such an MNP interception device implements the conventional approach to message interception described above. Again, the operational concept is to match data in the intercepted message to a predetermined trigger. When a match occurs, the message is either suppressed or modified with data selected in view of the trigger condition. It is thus seen that the conventional understanding of message interception is uniformly oriented toward processing the message according to a predetermined procedure (suppression, or adjustment of data in the message) determined by the message.

However, many potentially desirable service functions are difficult or impossible to implement by such message-determined handling of an intercepted message. Some service enhancements have been realized using a message interceptor in conjunction with an IN service node, when the network supports IN services. Examples of such service enhancements are described in U.S. Patent No. 5,949,871 to Kabay et al. However, qualifying a mobile network for IN services and implementing an IN service node are both expensive investments that mobile service providers may be unable to undertake. Moreover, current IN service enhancements have tended to offer only limited additional services and to generate substantial additional message traffic. It has been discovered that these disadvantages arise, at least in part, from a failure to utilize fully the information in the existing messages.

In one aspect, the present invention solves such problems by departing from the conventional interception paradigm of comparing message data to predetermined triggers and modifying or suppressing the message when a match occurs. This departure arises through the discovery that new information can be obtained by appropriate analysis of the basic messages. If obtained at an appropriate location in the mobile network, such new information can be used to provide substantial new services without modifying the existing network components and without requiring IN upgrades.

The distinctive approach used here may be better understood by considering the different manner in which information flows relative to the message in the message interception process. In the conventional forms of message interception, as described above, the flow of information is from the interceptor into the message. At best, the intended outcome is to provide changed or additional information to the message, based on the predetermined matching criterion. The alternative of suppression eliminates the entire message, and the message content to achieve the requested service function must be reproduced in a new message. Information in the message is used solely for the purpose of identifying the corresponding predetermined routine by which to handle the message.

In other words, conventional message interception uses predetermined data outside the message to modify (or suppress) data in the message. The flow of information is toward the message, because the predetermined information is taken from outside the message to affect the message itself (or specific related messages).

The invention's novel application of message interception arises from the realization that the existing messages used in the network are themselves a potentially rich source of useful information. Such new information may, for example, relate to one or more of the network subscribers, or perhaps to the services being provided by the network. The possibility of obtaining new information, based on the messages themselves, creates the possibility of performing useful service functions using the new information.

In part, the present invention embodies the discovery that such new information is potentially available. But the discovery that message interception can yield new information does not mean that any new information that might be thus obtained would actually be useful for providing desirable services. Further, even if useful information is potentially available, that information must be identified, obtained when and where needed, and used effectively.

The present invention applies various discoveries to overcome all of these obstacles simultaneously. In a first aspect, the invention employs a novel type of network device that will be called a "signaling relay point," or "SRP." A preferred embodiment of such an SRP comprises a Mobile Applications Protocol (Map) based processing platform that intercepts some of the basic messages in the mobile network. The SRP analyzes the intercepted messages according to a comprehensive, real time database and selectively performs supplemental processing activities based on the results of the analysis.

The MAP is well known in the telecommunications arts as a standard part of the functional or "level 4" portion of the SS7 message architecture. A preferred embodiment of an SRP used in the present invention is configured for use in SS7 networks and desirably operates on MAP-content messages. However, those skilled in the telecommunications arts will recognize that the present invention also can be applied to substantial advantage in networks configured for other signaling architectures (IS-41, etc.). As noted above, the present invention may be configured for any of a variety of different signaling formats including Common Channel Signaling Network (CCSN) formats such as SS7 (used in GSM and and IS-41 networks).

As a MAP based platform, an SRP of the present invention may be implemented in a mobile telecommunications network such as a cellular, PCS, or GSM wireless network. However, it will be apparent to those of skill in the art that the essential features of the invention will provide substantial advantages in other application contexts. Such alternative contexts for the invention include, but are not limited to, satellite telecommunications networks and similar networked communications environments.

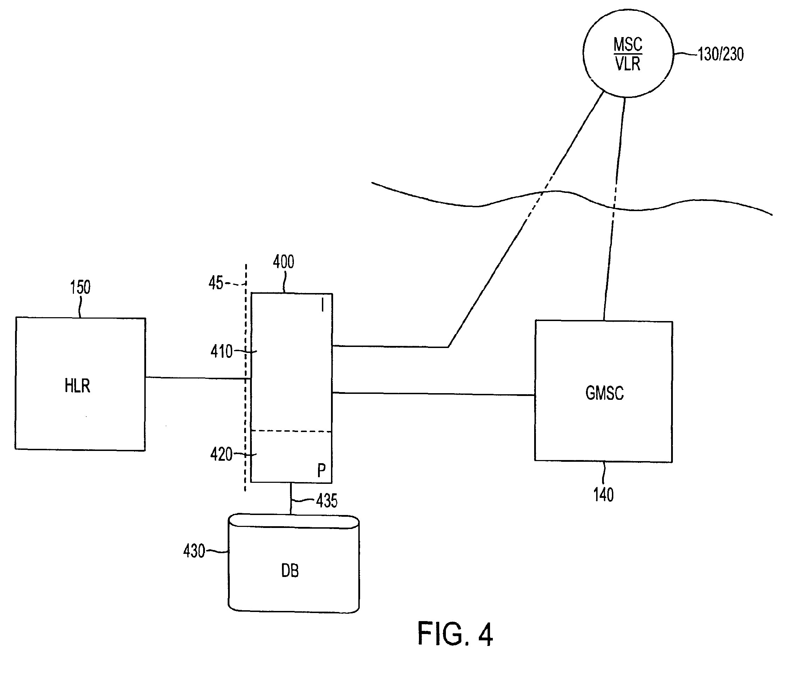

FIG. 4 illustrates a portion of the mobile network 100 of FIG. 1, including the GMSC 140, the HLR 150, and a MSC/VLR (either MSC/VLR 130 or MSC/VLR 230). Interposed in the network, between the HLR 150 and other network elements, is an SPR 400 as may be employed in an exemplary embodiment of the invention. The SRP 400 is displaced from the HLR 150 in the network, and therefore the benefits provided by the invention can be achieved without modification to the HLR 150. On the other hand, some or all incoming messages (from GMSC 140 or MSC/VLR 130/230, for example) directed to the HLR 150 are intercepted by the SRP 400. Thus, the SRP 400 stands at a threshold point 405 for the HLR 150.

Some basic features of the exemplary SRP 400 are also shown in FIG. 4, such as an interface unit (I) 410 and a processing unit (P) 420. The interface 410 provides the basic interception functions of the SRP 400, whereby messages are received from a network link (either coming into the HLR 150 or sent out from the HLR 150) and processed for further analysis. For example, the interface 410 may comprise known components for unpacking and repacking the received message, such as components to deframe, demultiplex, and decode the message, and to extract specified data therefrom and to reverse those operations. As noted above, the details of message interception are known. An exemplary message interceptor is disclosed in the above-cited U.S. Patent 5,905,724 to Carson et al., the disclosure of which is incorporated herein by reference.

The SRP 400 may be implemented on any of various known message interception platforms, such as the interceptor platform disclosed in the aforementioned patent, or MNP platforms as are well known in the art. Alternatively, a desirable SRP platform is the IMS platform from Comverse Network Systems, Inc., together with the OMNI SignalWare™ SS7 stack, also from Comverse Network Systems, Inc.

The Comverse IMS (Intelligent Mobile Services) platform is a core platform upon which SRP services and other services may be built. The entire platform is considered as the IMS, while various services (SRP services, as well as other services) are "applications." The IMS may be configured as an SRP to provide numerous value-added services for mobile network users.

The overall IMS platform may be described as a 4 redundancy computing element distributed processing system with common database engine. The computing elements may be configured to operate in hot standby or load sharing mode. Each computing element connects to the network using one or more SS7 signaling links, for example, from one to 32 SS7 links or preferably from one to 64 SS7 links. Each computing element may comprise two Intel Pentium III-class dual processors as symmetric multi-processing CPUs running a multitasking operating system such as UNIX™, LINUX™, etc.

The Omni SignalWare™ stack may be used for the SS7 stack. The SRP service application, such as an application of the present invention for providing mobile services based on adaptably selectable mobile communications routing, runs over the Omni stack. The database is desirably a fully redundant system using two multitasking servers (such as UNIX™ servers) in a load-sharing mode running Oracle™ as the database engine. The database platform may be a medium-sized RISC machine, such as the DS-20™ system available from Compaq Computer Corp., or the Netra™ 1400 system available from Sun Microsystems, Inc.

As explained below, the numerous advantages of the present invention derive, in the case of the SRP 400 illustrated in FIG. 4, from a combination of the operations of the interface 410 and the processing unit (or processor) 420. The processor 420 may be configured to receive data extracted from a message by the interface 410 and to perform further processing activities based on the extracted data. In particular, the processor 420 can determine analysis results for the extracted data and initiate control functions regarding the intercepted message. These control functions can affect the intercepted message to enhance the service function of the message, and (alternatively or in addition) they can initiate new service activities, such as new messages, to perform other service functions. The SRP 400 desirably performs its analysis functions by reference to a comprehensive, real time database 430. The database 430 may comprise an integral part of the SRP platform or may be a stand-alone unit accessible by the SRP through a data link 435.

Several aspects of the present disclosed SRP will now be described in general terms, before describing an implementation of prepaid mobile services using a device such as the SRP 400.

As indicated above, a first distinctive aspect of the disclosed SRP relates to obtaining new information from existing messages in the network. Through the processor 420, the SRP 400 is capable of determining supplemental information from extracted data and selectively performing service tasks using such supplemental information. Here, supplemental information is a particular type of information representing a fact or facts about a particular subscriber or other party, or about a service provider, as will be explained.

It is to be emphasized that the fact or facts represented by supplemental information have significance independent of the particular message that has been intercepted, or even related messages. It has been found that such information, having independent factual significance, can be unusually helpful for performing additional service activities. This benefit obtains particularly (but not exclusively) for service activities apart from the intended function of the intercepted message.

Hence, supplemental information also has the distinctive feature of being information independent of both the intercepted message and related messages. More specifically, supplemental information is information that (1) is not included in data extracted from an intercepted message, and (2) represents a fact or facts about a subscriber, a service provider, or another entity relating to the mobile network, apart from information for carrying out the intended function of the message (or related messages, such as acknowledgement messages). As to (2), message function data includes, for example, message routing information, subscriber data supplementing data already contained in the message, and so forth.

It is thus seen that supplemental information is message-independent information about entities having interests in operation the mobile network: subscribers, parties communicating with subscribers, the network operator, and similar entities. In many cases, supplemental information will represent a time sensitive fact that may age rapidly and thus must be frequently updated or determined anew. In other cases the supplemental information will represent a relatively static fact about an interested entity, but the fact will nevertheless be unrelated to performance of the intended function of the message.

Accordingly, as used herein, "supplemental information" is defined to mean information representing a message-independent fact about an entity that controls the network or may request services from the network. Supplemental information is used in this first aspect of the disclosed SRP because, depending on the particular facts represented thereby, the information may provide an additional fact criterion upon which service determinations can be made.

In a typical case, supplemental information may indicate a current service status of a particular mobile station or a current status of a particular service provided by the mobile network operator. A particularly useful example of supplemental information is a "roaming" status for a mobile station assigned to a given home network. The roaming status indicates whether the mobile station in its current location is roaming. In other words, a roaming status represents the relationship between the current geographic location of the mobile station and the location of the home network. Supplemental information may also include such facts as provider-imposed limitations on the subscriber's operation of the mobile station at that location.

A further aspect of the present invention and the disclosed SRO relates to the unusual usefulness of information, such as supplemental information, that is obtained and utilized at a selected point in the signaling system. It is well known that an HLR of a mobile network is or comprises a comprehensive storage for information relating to subscribers of the network. The stored information ("subscription information") typically includes both static information (preferred long distance carrier, etc.) and time-sensitive information, such as the network address of a mobile switching center currently serving the subscriber's mobile station.

However, previously it has not been appreciated that an HLR also constitutes a powerful nexus for communication of fresh information about the network subscribers and other interested entities. The autonomous registration process outlined above assures that the HLR is promptly updated with new location information when the mobile station registers in a new MSC area. In the reverse direction, subscription information for registering mobile stations flows from the HLR to the MSCs serving the mobile stations. Considered in this light, then, it can be seen that most of the information used by the network in providing current services flows into and out of the HLR with the control messages.

The present invention incorporates this observation regarding the high density of current information flowing to and from the HLR. If supplemental information is to be determined based on data extracted from existing messages, as the first aspect of the disclosed SRP proposes, then the immediate vicinity of the HLR becomes an unusually desirable location at which to tap into those messages. A second distinctive aspect of the disclosed SRP is thus the special location, adjacent to the HLR, at which message interception and data extraction should be performed.

Various alternatives have been proposed in the past to supplement the HLR with additional application programs, thereby to take advantage of the information stored therein. Such proposals have uniformly suffered from the serious disadvantage that they require the HLR to be modified to accommodate the additional application programs and ancillary data. These modifications are risky because they entail alterations to the already complicated data structures of the HLR. Further, even if they are successfully implemented, enhancements to the HLR for new services will necessarily increase the already substantial processing burden on the HLR.

The present invention departs from such proposals by recognizing that much current subscriber information stored on the HLR is also potentially available by tapping into the messages flowing into and out of the HLR. That is, the desired data is obtained from the information flux adjacent to the HLR, instead of by going into the HLR to get the data. The point of data extraction is outside the HLR signaling point, and thus subsists at a separate network element, the SRP. The SRP is directly connected to the HLR by one or more signaling links. This position, at a separate network element linked to the HLR but interposed between the HLR and other signaling points, will be called the "threshold point" of the HLR.

This second aspect of the disclosed SRP can thus be understood as providing a new "dynamic data access" mechanism for obtaining the message information from which supplemental information may be determined or additional services may be initiated. Messages are viewed as potential sources of useful information, rather than merely as transport vehicles to be loaded and directed appropriately for predetermined objectives. From this altered perspective, the location at which the messages are accessed becomes potentially significant. This second feature of the SRP incorporates the discovery that, in a mobile network, the threshold of the HLR is an unusually effective place to access the information contained in network messages.

It is noted that this new data access mechanism is an outgrowth of the novel approach to message interception embodied in the disclosed SRP. As described above, conventional message interception simply implements message-handling functions such as message suppression, message redirection, or modification of message data. The SRP, in contrast, uses message interception to determine information from data in the intercepted message, such as supplemental information, and to perform additional services using the information.

In a third aspect, the disclosed SRP also embodies the discovery that even existing information, when extracted from a message passing through this special location, can be used for additional services apart from the subscriber service of the intercepted message. It is commonly understood in the art that a message in a telecommunications network is initiated to carry out a well-defined service function. For example, the end office serving a calling party initiates an IAM message to carry out the service of setting up a voice path to the called party. Generally, each message in the network is initiated at a signaling point to carry out a corresponding service.

It has been discovered that the special location for extraction of data to generate supplemental information is also an unusually effective location from which to initiate additional services. Here a "service" means a substantial activity producing an affirmative communication result, apart from merely managing messages on the network. For example, as noted above, a service may comprise setting up a voice path between two users of the network or performing an accounting or billing function with respect to a mobile communication. This effectiveness of the HLR threshold as a location for initiating a second service is a consequence of the dense flow of information in the vicinity of the HLR.

These three aspects of the disclosed SRP---extracting data at a nexus of information flow, determining supplemental information based on the extracted data, and initiating additional services at the same nexus based on the extracted data---each make possible a broad range of new service capabilities. Using supplemental information, the SRP can perform service processing that was previously impossible or unfeasible to implement. When messages are intercepted in the special location adjacent to the HLR, the potential for obtaining and using supplemental information is markedly increased. Moreover, even message-related information can be used to initiate at the same special location a range of processing activities for additional services.

Message processing responsive supplemental information takes on various forms, depending on the additional service to be performed. Here the term "supplemental service processing" will be used specifically to indicate service processing responsive to supplemental information. That is, "supplemental service processing" is defined here to mean additional processing, performed in response to the supplemental information, to carry out additional service functions. Supplemental service processing may comprise (but does not require) an initial service determination, performed in response to the supplemental information, regarding whether still further processing will be initiated. The initial service determination is based on supplemental information derived from either the intercepted message or another message intercepted previously.

If the initial determination is affirmative (in an appropriate sense), then the supplemental service processing may also comprise any of various known types of further processing. For example, the intercepted message may itself be modified or suppressed, responsive to the initial service determination. If the message is modified, then the modification may be based on the supplemental information, or other information, or both.

The further processing may comprise, alternatively or in addition, modification of another message. Here it is assumed that the supplemental information has been determined, to make possible the service determination about whether to perform the further processing. Therefore, it is to be understood that the "other message" is a message intercepted at a time at least subsequent to determination of the supplemental information. On the other hand, "another message" may be a message from which data is extracted and other supplemental information is determined, and in this case the other message may also be intercepted before or concurrently with the first message. In the following specification, the context will make clear the sense in which "other message" or "another message" should be construed.

An equivalent formulation of this alternative is as follows: intercept a message and extract data therefrom, make an initial service determination regarding the message but based on previously determined supplemental information, and selectively perform further processing based on the service determination. Here the previously determined supplemental information is assumed to have been based on data extracted from a previously intercepted message. Hence, modifying a current message based on previous supplemental information and modifying a subsequently intercepted message based on the current supplemental information are understood to be equivalent.

A third type of further processing, alternatively or in addition to the others, is to initiate another message responsive to the service determination. Generally the other initiated message will be directed toward a service function different from the service function of the intercepted message (and also different from corresponding response messages). For example, an IAM message (requesting call setup) and an SRI message (requesting routing information to be sent) have different service functions.

The other message may be initiated at a time subsequent to relay of the intercepted message, or substantially simultaneously therewith. In the latter case the SRP basically becomes a spawning point for multiple concurrent tasks responsive to the intercepted message. For example, an incoming message to the HLR may be relayed on to the HLR for conventional processing, while concurrently the SRP sends out another message to control the service provided by the network or to initiate a further service. The initiation of the other message may therefore mark a processing bifurcation point, from which two independent service processing sequences proceed in alternation or (preferably) in parallel.

Supplemental service processing thereby achieves additional service functions (such as for subscriber-oriented "supplemental services" as commonly understood in the art, but also including functions for non-subscriber services) in conjunction with determination of supplemental information. The supplemental information may provide a decision point for whether to initiate further processing with respect to specific messages. Alternatively or in addition, the supplemental service processing may carry out modification of a message, or initiation of a new message, based on data of the supplemental information itself. Thus, supplemental service processing includes cases where the supplemental information (or some relevant portion thereof) is incorporated in a modified message or a new message, even without obtaining an initial determination result in response to the supplemental information.

The third aspect of the disclosed SRP may be combined with the first two aspects to provide a further enhancement. This enhancement is optional but can produce a further synergistic effect from the availability of useful information, such as supplemental information, at the HLR threshold. With the supplemental information available at the threshold, the possibility then exists to carry out the further processing activities at the same location. The further enhancement thus embodies the discovery that the HLR threshold is also a particularly effective location at which to perform the supplemental service processing of the SRP.

The significance of the HLR threshold for the third aspect, message processing based on extracted data, is only indirectly related to the feature of the threshold as a nexus of information flows. The HLR continually receives incoming messages, containing information about subscribers and other entities, and continually generates outgoing messages to carry out the routine operations of the mobile network. With the disclosed SRP, such messages can be intercepted and further message processing performed (selectively) to achieve specified service objectives. The orientation of the further message processing is therefore toward control of further operations on the network, by processing messages passing through or initiated at the HLR threshold.

The effectiveness of message processing at the HLR threshold therefore relates to the relatively high density of message paths at that location, rather than to the density of information flows. More message paths will, of course, typically correspond to more messages and more information flowing in the messages. But the third discovery emphasizes yet another point of view: that messages can be used as means toward the end of achieving supervening service objectives.

This third point of view also differs from the conventional understanding of message interception. There, predetermined information is used to effect control over a message or specified messages. A further service function could be provided only by re-routing the intercepted message to an appropriate signaling point, typically a service control point or an intelligent peripheral. Here, messages are used to bring about specified service functions, in accordance with service determinations and based on supplemental information. The presence of the SRP at a threshold point of the HLR creates the potential for controlling additional services from this communication nexus of the mobile network.

A specific service implementation of the present invention will now be described for providing roaming capabilities to prepaid subscribers in a mobile network.

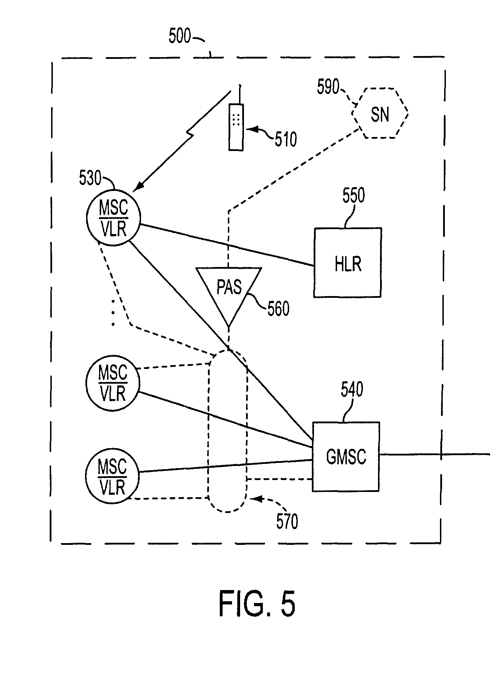

FIG. 5 illustrates a service implementation for providing mobile telecommunications services according to prepaid accounts. A home network 500 of FIG. 5 provides mobile services to several mobile stations including a prepaid mobile station (PPMS) 510. The network 500, similar to the network 100 of FIG. 1, comprises a number of base stations (not shown) and several mobile switching centers such as MSC/VLR 530. A GMSC 540 and an HLR 550 are also similar to the conventional elements illustrated in FIG. 1. A mobile subscriber (not shown) owns or leases the PPMS 510, which is assigned to the HLR 550. As in the mobile network 100 of FIG. 1, the network 500 may comprise several gateway MSCs and several HLRs, although only one of each are shown in FIG. 5.

In the implementation of FIG. 5, the operator of home network 500 has offered subscribers the option of prepaid accounts, as described above. Accounting for these prepaid accounts is conducted through a prepaid accounting system (PAS) 560 that communicates with the GMSC 540 and the MSCs, such as MSC/VLR 530, over a data network 570. In particular, system 560 controls the switches 530, 540, etc., to suspend service to a prepaid MS such as the PPMS 510 whenever the prepaid account balance for the PPMS becomes exhausted.

In an alternative implementation, the PAS 560 is embodied in one or more separate systems in the network. In this case all calls from PPMS 510 are routed from the serving MSC 530 (which generally does not have a connection to the PAS 560, in this alternative) to a designated network element that is in communication with the PAS 560. The designated network element could be an MSC, but more commonly is a service node, SN 590. Service nodes are well known in the art for providing supplementary services in telecommunications networks having Intelligent Network (IN) or Advanced Intelligent Network (AIN) capabilities.

The limitations on prepaid roaming, as noted above, generally have arisen because the accounting system 560 must be able to control communications for the PPMS 510 by accessing the serving MSC, such as MSC/VLR 530, over the data network 570. In the network 500 as illustrated, each of the MSC/VLRs of the network is linked to the PAS 560 through the data network 570. Alternatively, all calls to or from PPMS 510 are routed through a system element, such as SN 590, that does have a connection to the PAS 560. Thus, the PAS 560 can control calls to or from the PPMS 510 without regard for the particular MSC at which the PPMS 510 is currently registered. If some of the MSCs of mobile network 500 were not connected to the data network 570, or did not have the capability to route calls to SN 590, then the PPMS 510 would be prohibited from registering at any of those unconnected MSCs.

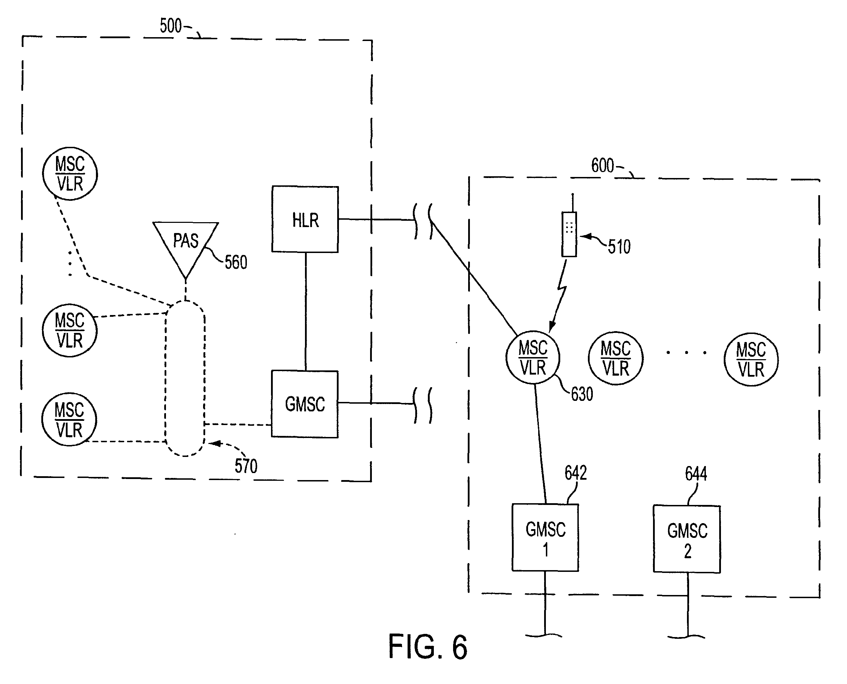

FIG. 6 illustrates the mobile network 500 together with another mobile network 600 covering a different geographical region. The network 600 comprises several MSCs, which may be similar to the MSC/VLR 530 of network 500, as well as one or more gateway MSCs. Here network 600 is depicted as comprising two gateways, GMSC1 642 and GMSC2 644. A call for a mobile station in network 600 may be routed into or out of the network through either GMSC1 642 or GMSC2 644. Typically the selection of the gateway through which a call is routed will depend on the location of the serving MSC/VLR, load balancing considerations, or other factors, as is well known in the art. Of course, a call connection between mobile stations both located within network 600 may be completed without routing through either gateway, either between MSCs or within a single MSC.

In FIG. 6, the PPMS 510 (i.e., the subscriber in possession of PPMS 510) has departed the coverage region of mobile network 500 and has entered the coverage region of mobile network 600. The PPMS 510 must register at a serving MSC/VLR 630 before mobile telecommunications services can be provided to the subscriber in network 600. Except for the problem described below, this registration would occur routinely in the conventional manner described above with reference to FIG. 3.

The operator of mobile network 600 is assumed to have no particular business relationship with the operator of mobile network 500, other than the usual business relationships carried on by wireless carriers for conventional post-paid services such as post-paid roaming. Accordingly, the MSCs of network 600, such as MSC/VLR 630, are unable to connect to the data network 570 of network 500. This situation is similar to the case, noted above, in which an MSC of network 500 may be unconnected to the data network 570.

Specifically, when the MSC/VLR 630 sends a UL message to the HLR 550 to initiate registration, the HLR 550 detects that the source address of the UL message relates to a switch outside the home network 500. The HLR 550 further detects that the ESN of the PPMS 510 relates to a prepaid account. The HLR 550 then prohibits registration from progressing further. This prohibition can be effected by any of various methods, such as by refraining from returning an acknowledgement message UL_ack, or (the preferred method) by returning a UL_ack message indicating that registration of the PPMS 510 has been refused.

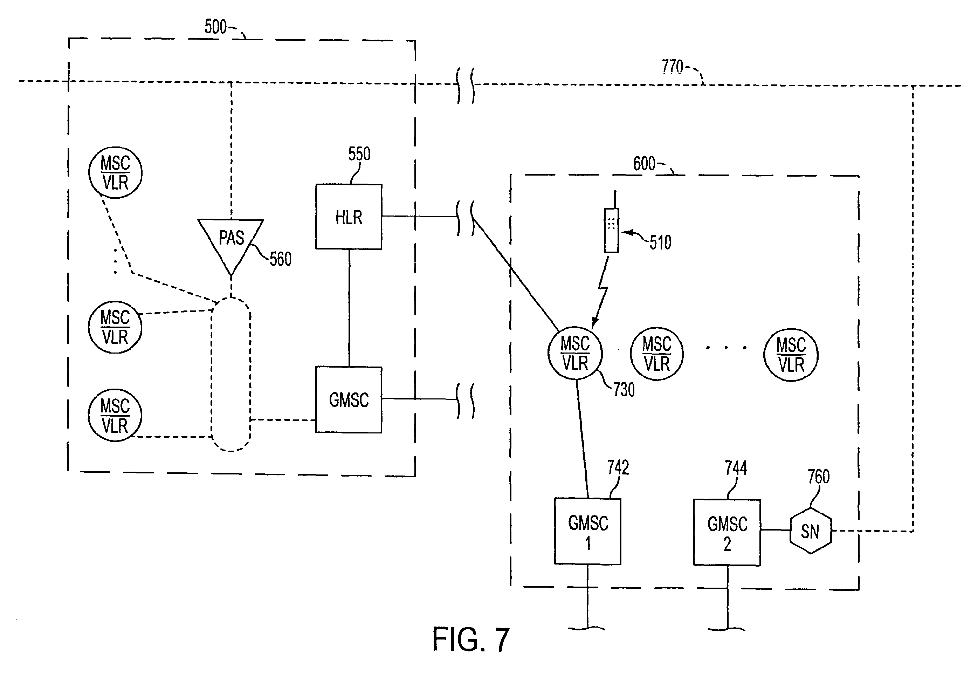

FIG. 7 illustrates the mobile network 500 together with yet another mobile network 700, which maybe similar to the mobile network 600 in every respect except the following feature. Specifically, network 700 comprises several MSCs such as MSC/VLR 730, gateways such as GMSC1742 and GMSC2 744, and one or more HLRs (not shown). Notably, the mobile network 700 also comprises a service node (SN) 760 in communication with GMSC2 744. As is well known in the art, and as noted above, a service node such as the service node 760 is a data processing platform for providing enhanced services with respect to calls routed through a connected switch (here, GMSC2 744).

In a typical case the SN 760 is a separate network element that may be connected to the GMSC2 744. That is, typically the service node can receive a call from another network element (such as GMSC2 744) over a circuit-switched connection (i.e., a voice path type connection). Such a service node also typically comprises call control logic, by which the service node can control the call that has been routed from the other node (e.g., allow the call to proceed, track the duration of the call, disconnect the call, play an announcement, etc.). As a separate network element, the service node usually also exchanges messages with other network elements through the Common Channel Signaling Network (CCSN, e.g., SS7 network) of the mobile network 700. Alternatively, SN 760 may be coupled more closely to the GSMC2 744, such as by being implemented on a common platform therewith.

The service node 760 may be further coupled to a wide area network (WAN) 770, which may be an interconnected system of networks such as the Internet. FIG. 7 also shows a situation in which the prepaid accounting system 560 of mobile network 500 is also coupled to the WAN 770. The service node 760 therefore has the capability of communicating with the PAS 560, by appropriate communications protocols over WAN 770.

The presence of service node 760 in communication with GMSC2 744 (or another element of network 700) provides the PAS 560 with the capability of controlling calls for a subscriber of mobile network 500 who has roamed into network 700. This control might be realized, at least where the calls are routed through the network element in communication with the SN 760, such as the GMSC2 744. However, the HLR 550 must nevertheless refuse to register the PPMS 510 in the visited mobile network 700, notwithstanding such a communications capability. This refusal is necessary, even for mobile network 700, because the PAS 560 cannot be assured of controlling calls to or from the PPMS 510. This is because the HLR 550 in the home network 500 lacks the necessary processing logic to handle service requests differently depending on whether the PPMS 510 is roaming in network 600, without a service node, or in network 700 with SN 760. That is, without additional information, the PAS 560 cannot be assured that a call for the PPMS 510 would in fact be routed to a serving network in which the call would be subject to control by the PAS 560.

An aspect of the present embodiment of the invention is the following observation regarding reasons for this lack of control. As noted above, a conventional home location register, such as HLR 550, lacks processing logic to enable or disable capabilities, such as receiving or making calls when roaming, based on the identity of the foreign network. In particular, the HLR 550 in the home network 500 lacks the ability to process service requests from PPMS 510 differently, depending on whether the mobile station is currently registered in network 700 or in another, unconnected network such as network 600 in FIG. 6. The operator of the mobile network 500 therefore bars roaming calls to or from the PPMS 510 whenever the mobile station is located in either the mobile network 600 or the mobile network 700.

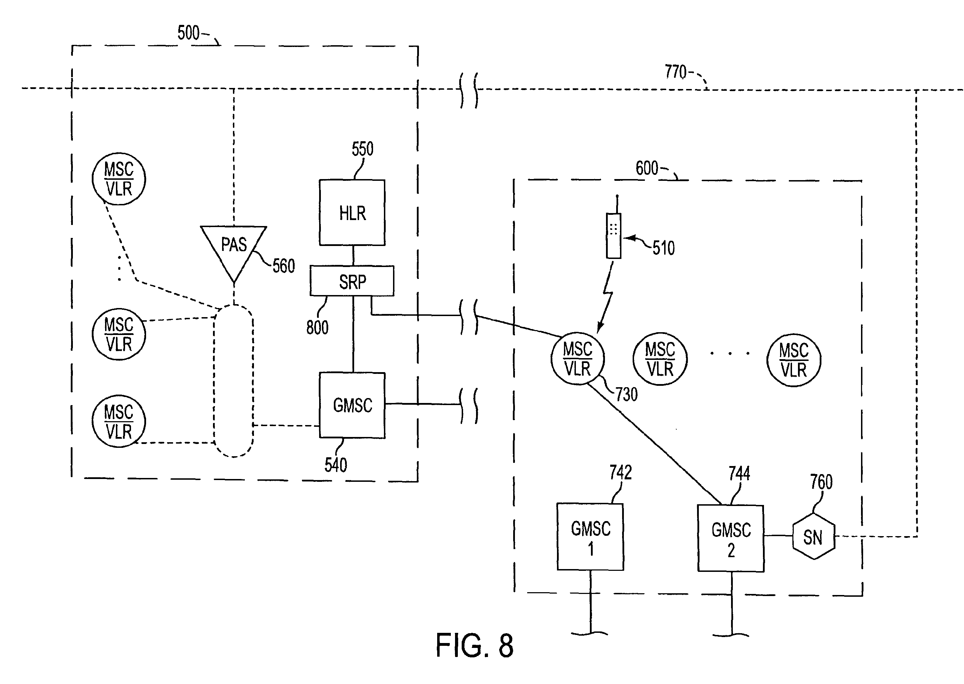

FIG. 8 also shows the mobile networks 500 and 700, but with the following difference provided by the present invention. In FIG. 8, the home mobile network 500 of PPMS 510 has been supplemented with an SRP 800, which may be similar to the SRP 400 shown in FIG. 4. When the home mobile network 500 has been thus supplemented with an SRP such as SRP 800, the foregoing prohibition on roaming for prepaid subscribers can be eliminated.

As shown in FIG. 8, the SRP 800 is interposed in the mobile network 500 at a threshold point for the HLR 550. In the illustrated embodiment, the SRP 800 intercepts all location update messages to the HLR 550. However, in an alternative configuration the SRP 800 may intercept only those UL messages from MSCs in other networks, such as mobile network 700.

In either configuration, and as explained below, the SRP 800 allows the operator of network 500 to maintain control over communications by the PPMS 510, even when the PPMS 510 roams into a mobile network such as network 700. The visited network preferably has a gateway MSC that is coupled to a service node, such as SN 760, capable of real time communications with the PAS 560. Various IN platforms are available to provide the service node functions of SN 760, such as the TRILOGUE Infinity (TM) platforms available from Comverse Network Systems, Inc.

Other configurations are possible for capturing the prepaid mobile station's outgoing calls (i.e., mobile-originated communications) and are within the scope of the invention. The invention enables real-time definition of a forced routing number to connect the outgoing call through a specified switching point from which the call can be controlled. The specified switching point is preferably a gateway MSC of the visited network. The home network MSP will have a service agreement with the visited network MSP, whereby the VMSC/WLR 730 is configured to implement the forced routing number for the specified switching point. Such a switch configuration is a routine matter of switching software that is within the ordinary skill in the art and will not be described in detail here.

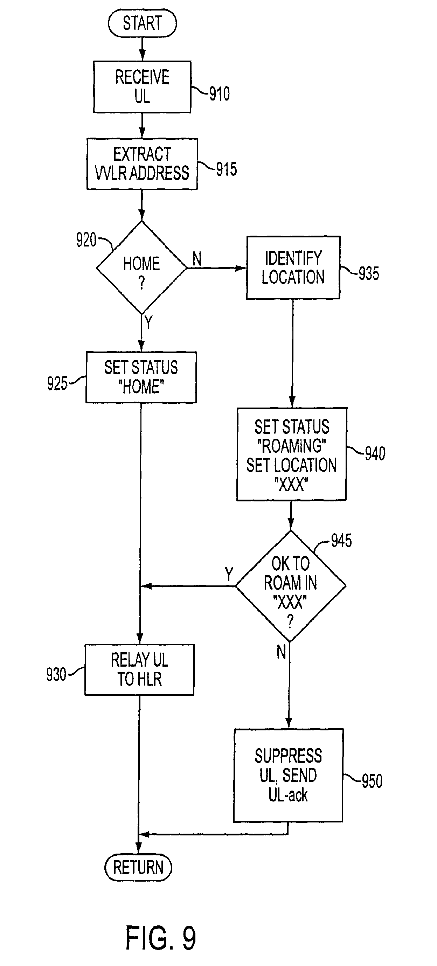

FIG. 9 is a flow diagram illustrating a location update procedure for a prepaid mobile station such as PPMS 510 assigned to a mobile network such as network 500, as depicted in FIG. 8. The operations of the illustrated procedure are preformed by an SRP such as the SRP 800. Initially the PPMS 510 attempts to initiate registration by sending an ID message to a serving MSC, such as MSC/VLR 730. In turn, the MSC/VLR 730 initiates a UL message to the home network 500 and, in particular, to the HLR 500 to which the PPMS 510 is assigned. These operations are essentially identical to the location update procedure shown in FIG. 3.

However, unlike in the registration procedure of FIG. 3, in the procedure illustrated in FIG. 9 the SRP 800 receives the UL message in an operation 910. The VVLR address (e.g., source point code SPC) identifying the originating point, MSC/VLR 730, is extracted from the UL message at operation 915. The extracted address is checked in operation 920 to determine whether the PPMS 510 is attempting to register at an MSC of the home network 500. If the determination of the operation 920 is affirmative, then the procedure advances to an operation 925. In the operation 925 a roaming status indicator, stored by the SRP 800 and associated with the particular PPMS 510, is set to "HOME." The procedure then advances to operation 930, in which the UL message is relayed to the HLR 550. From this point forward, the registration procedure can be carried out in the conventional manner.

However, if the determination at operation 920 is negative, then it is determined that the PPMS 510 is attempting to register in a foreign network. Accordingly, the procedure of FIG. 9 advances to operation 935, where the location of the visited network 700 is identified. At operation 940 the SRP sets the roaming status for PPMS 510 to "ROAMING" and sets a location indicator to indicate the location "XXX" of the visited network 700.

Next, at operation 945, the SRP 800 determines whether the PPMS 510 is permitted to have mobile communications in the visited network 700, i.e., whether the PPMS 510 is permitted to "roam" there. As noted above, the prepaid accounting system 560 must be able to control any calls by the PPMS 510, either directly through the data network 570 or indirectly through WAN 770 and a suitable service node. Thus, roaming will be prohibited unless the visited network has at least one gateway with a suitable service node, such as GMSC2 744 and SN 760 in network 700.

If the location "XXX" indicates that roaming is permitted in the visited network, then the procedure branches back to operation 930 from operation 945. However, if roaming is prohibited for the PPMS 510 in the visited network, then in operation 950 the SRP 800 suppresses the UL message instead of relaying the message to the HLR 550. In a preferred embodiment, the SRP 800 will generate or cause to be generated an UL_ack message carrying an indication that the registration of the PPMS 510 has been refused. This response by the SRP 800 is desirable because the visited MSC, MSC/VLR 730, will then refrain from repeating the registration attempt process.

Alternatively, the procedure of FIG. 9 may advance directly to operation 930 from operation 940, i.e., without performing the determination of operation 945 or the suppression of operation 950. In this alternative the SRP 800 relays the UL message to the HLR 550, without regard for whether the PPMS 510 is permitted have mobile communications in the visited network. Other operations to bar calls to and from the PPMS 510 are then performed, as explained below.

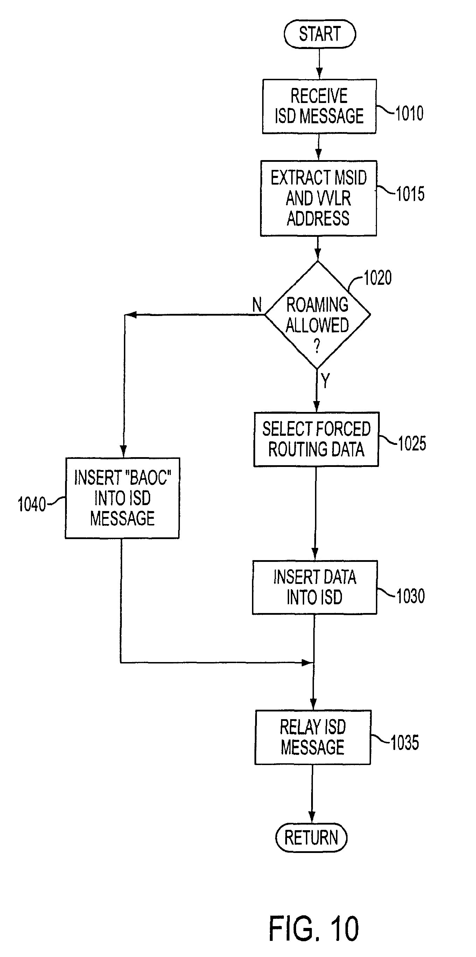

FIG. 10 is a flow diagram illustrating an exemplary procedure for modification of a subscriber data insertion message by the present invention. If the SRP 800 relays the UL message to the HLR 550, then the HLR 550 replies with an acknowledgement message UL_ack and a subsequent subscriber data insertion message ISD. These operations parallel the operations for the messages 305-320 in the conventional registration procedure depicted in FIG. 3.

The data modification procedure of FIG. 10, like the initial procedure of FIG. 9, is desirably carried out by an SRP such as SRP 800 in home network 500. The HLR 550 sends out the subscriber data message ISD as usual, but operation 1010 receives the ISD message at the SRP 800 instead of direct transmission to the serving MSC (MSC/VLR 730). The MS identification number for the registering PPMS 510 (e.g., the ESN in an IS-41 network) is extracted from the intercepted ISD message at operation 1015. The VVLR address identifying the destination point of the ISD message is also extracted.

At operation 1020 the SRP 800 determines whether the PPMS 510 is permitted to have mobile communications in the current network. Preferably, the operation 1020 may be performed by checking a roaming status that has been previously stored for the PPMS 510 when a UL message was intercepted by the SRP 800. Alternatively, the SRP 800 can determine a roaming status and a location for the PPMS 510 in the course of operation 1020, using the extracted MS ID number and the VVLR address. In the procedure of FIG. 10 it is assumed that the roaming status has been checked and that the current network is not the home network 500.

If mobile communications are permitted, although the current network is not the home network 500, then the SRP 800 selects suitable forced routing data for the visited network in operation 1025. The forced routing data will be selected based on the identity of the visited network. For example, in FIG. 8 the visited network is mobile network 700, in which GMSC2 744 has the SN 760 coupled thereto. The PPMS 510 will therefore be permitted roaming communications in network 700, provided all such communications (incoming or outgoing) are routed through the gateway switch 744. The routing data selected for network 700 at operation 1025 will ensure that the serving MSCV?R 730 will route any communications for the PPMS 510 through the GMSC2 744.

The selected routing data are then inserted into the intercepted ISD message at operation 1030. Having suitably modified the ISD message, the SRP 800 relays the modified message toward its designated destination (in this case, to the serving MSC/VLR 730) at operation 1035. The MSC/VLR 730 receives the modified ISD message in the usual manner. In a particular embodiment, the MSC/VLR 730 stores the forced routing data as the current routing number for the visiting PPMS 510.

If in operation 1020 the SRP 800 determines that roaming communications are prohibited for the PPMS 510 in the visited network, then the procedure branches from operation 1020 to operation 1040. The SRP 800 may then insert a Bar All Outgoing Calls (BAOC) attribute into the ISD message before relaying the message in the operation 1035.

Alternatively, at the operation 1040 the SRP 800 suppresses the ISD message and sends an acknowledgement message to the HLR 550, in a manner similar to suppression of the UL message as shown in FIG. 9 (see operation 950), instead of relaying the ISD message. The registration procedure for PPMS 510 then fails, whereby the PPMS 510 becomes unavailable.

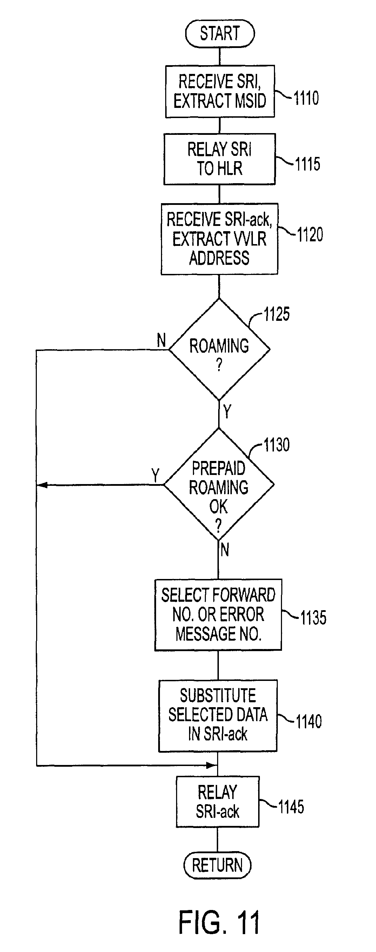

FIG. 11 shows a flow diagram for an exemplary procedure of the invention for capture of mobile terminated calls to a prepaid mobile station, such as PPMS 510, that is roaming in a visited network. It is assumed that a registration procedure as outlined in FIGS. 9-10 has been completed. Like the conventional case of call routing, as depicted in FIG. 3, a call setup request message IAM is received initially by the gateway MSC, GMSC 540, to which the PPMS 510 is assigned. The GMSC 540 then initiates a routing instruction request message SRI to the HLR 550.

The SRP 800 is interposed at the threshold point of the HLR 550 and accordingly receives the SRI message in an operation 1110. The mobile station directory number for the called mobile station (i.e., the CdPN in the intercepted message) is also extracted and stored in, for example, a buffer. The SRP 800 then relays the SRI message to the HLR 550 for conventional processing.

The HLR 550 replies to the SRI message with a SRI ack message addressed to the serving MSC, such as MSC/VLR 730. The SRP 800 receives the SRI_ack message at operation 1120 and extracts the VVLR address, i.e., the destination point code identifying the serving VVLR as the destination for the intercepted message.

The SRP 800 then determines, in operation 1125, whether the PPMS 510 is roaming in the current network. This is preferably performed by reference to a roaming status previously determined and stored responsive to a previously intercepted message such as the UL message (see FIG. 9). Alternatively, the SRP 800 can determine a roaming status for the PPMS 510 dynamically, by analyzing the extracted WLR address in relation to the identity of the home network 500.

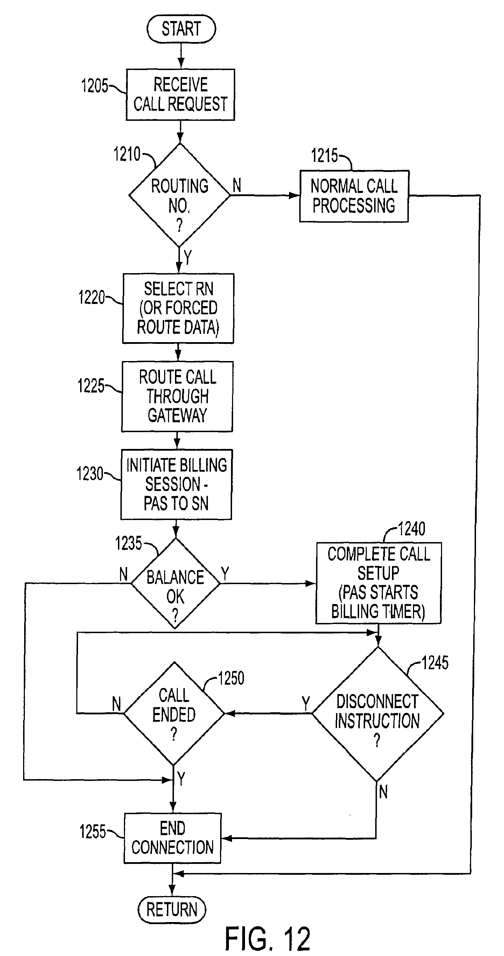

In either case, if the roaming status is "roaming," then the SRP 800 determines at operation 1130 whether the PPMS 510 is permitted to originate or receive roaming communications in the visited network. This determination could alternatively be performed through a home network service node, such as SN 590 in FIG. 1. As will be explained below with reference to FIG. 12, however, no such alternative is available for mobile originated (MO) calls. The present embodiment of the invention therefore provides a solution to a previously intractable problem that existed for MO calls in particular.

The procedure advances to an operation 1135 if the SRP 800 determines that roaming communications are prohibited for the PPMS 510 in the visited network ("NO" at operation 1130). Further processing of the intercepted SRI_ack message is required only if the SRP 800 determines that the PPMS 510 is prohibited from originating or receiving roaming communications in the visited network. In this situation, the procedure of FIG. 11 advances to operation 1135, where a call forwarding number is selected according to the CdPN extracted from the SRI message. An alternative to a subscriber selected forwarding number is to have the SRP 800 identify a routing number to a message service that provides an appropriate error message (e.g., "We are sorry, but the mobile subscriber you have dialed is unavailable at this time").

In either case, the SRP 800 substitutes the selected data into the SRI_ack message in operation 1140, by which the selected data replaces the routing number RN included in the acknowledgement message by the HLR 550. The modified SRI_ack message is then relayed to the GMSC 540 in an operation 1145 and subsequently may be processed in the usual manner.

If the roaming status is determined in operation 1125 to be "HOME," then the procedure jumps to operation 1145 and the SRI_ack is relayed without change. Also, if prepaid roaming is permitted in the visited network 700 ("YES" at operation 1130), then the procedure advances directly to the operation 1145 where the SRI_ack message is relayed without change.

It is noted that the roaming PPMS 510 may potentially originate a mobile communication or receive a mobile communication while in the visited network. In the latter case, to which the procedure of FIG. 11 is addressed, no change to the normal call routing is required for control of the prepaid call. This is because the call connection is already routed through the home network gateway, GMSC 540. The call is thus already captured for purposes of the prepaid accounting system PAS 560, because the initial call request (e.g., the IAM message from the calling party's end office switch) routes the call through the home mobile network 500.

The procedure of FIG. 11 is accordingly an optional service offering for mobile terminated calls to the PPMS 510. Such an optional offering is desirable, in particular through the operations 1135 and 1140, because an explanation for the failure of the call to be completed as dialed, or an opportunity to leave a message for the called subscriber, is thereby provided. These features are desirable from the standpoint of customer satisfaction because they minimize inconvenience to the calling party and the called subscriber when mobile communications in a given visited network are not permitted for the prepaid subscriber.

The modified SRI_ack message is then relayed to the GMSC 540 in an operation 1150 and is subsequently handled in the conventional manner. If the roaming status is determined in operation 1125 to be "HOME," then the procedure jumps to operation 1150 and the SRI ack is relayed without change.

FIG. 12 is a flow diagram illustrating call processing procedures for a call originating from a roaming mobile station such as PPMS 510. An operation 1205 is performed at the serving MSC, such as MSC/VLR 730, where a call request is received from the PPMS 510. An initial processing operation 1210 determines whether a routing number exists for the PPMS 510. If so, the VVLR may use the routing number without further determinations regarding the accounting status (prepaid/postpaid) of the mobile station. Alternatively, the VVLR may determine whether the requesting mobile station is a registered, prepaid roamer, by reference to the VVLR data. If the requesting mobile station is not a prepaid mobile station or is not registered, the serving MSC/VLR 730 proceeds with normal call processing for the situation in an operation 1215.

If operation 1210 determines that a routing number exists for the PPMS 510 (or determines that PPMS 510 is a registered prepaid roamer), then the procedure at MSC/VLR 730 advances to operation 1220. Here the previously stored routing number (or separate forced routing data) is retrieved. In operation 1225 the call setup is routed through the specified gateway having an associated service node such as SN 760. A billing session is initiated between the PAS 560 and the SN 760 over the WAN 770 in operation 1230.

Once the billing session has been initiated, the PAS 560 checks the account balance for the PPMS 510. If the account balance is sufficient to complete the call connection, the call setup is completed at operation 1240. The PAS 560 sets a timer to a time-out value corresponding to maximum possible call duration for the call, based on the subscriber's balance and possibly other service factors as determined by the MSP of network 500.

Such other factors might include, for example, network-based call length limitations, by which the network provider may not allow the duration of any given call to exceed more than a predetermined time limit, such as one hour, regardless of the subscriber's balance. Other such factors might include whether the subscriber may have other calls or data services in progress that would or possibly could limit the duration of the present call. Still other factors may apply, such as restricting the subscriber to making call only during certain times of the day, etc. Such call control factors are numerous and well known to those of skill in the art, and further details will not be provided here.

An operation 1245 provides a branch point to enter early termination of the call, while the call is still ongoing. Specifically, the serving VMSC/WLR 730 may receive an instruction from the PAS 560 (through the SN 760) to end the call prior to termination by the parties. Typically such an instruction will be provided by the PAS 560 when the prepaid subscriber's account balance has become exhuasted, as indicated by the timer (see operation 1240) reaching the indicated time-out value. In response to this instruction, or when an operation 1250 determines that the call has been ended by the parties, the connection is ended at operation 1255. If the account balance is found to be insufficient at either operation 1235, then the procedure advances directly to operation 1255 and the connection is dropped.

A signaling relay point as disclosed herein and used to implement prepaid mobile services of the present invention may also be used to implement other value-added subscriber services as well. Typically in providing multiple services through a single SRP platform it may be desirable to establish a hierarchy by which to determine the order in which the services are provided information from an intercepted message. The choices and priorities that determine such a hierarchy will typically depend on the particular network, the preferences of the MSP, and the particular suite of services to be implemented.

## Claims

1. A prepaid mobile telecommunications service method, comprising:
determining supplemental information based on data extracted from a message intercepted at a threshold point of a home location register; and
performing service processing to carry out a service for a prepaid mobile station, the service processing comprising supplemental service processing based on the supplemental information.

2. A method as recited in claim 1, wherein the extracted data comprises data identifying the prepaid mobile station.

3. A method as recited in claim 1 or claim 2, wherein the supplemental information comprises a current service status of the prepaid mobile station.

4. A method as recited in any of claims 1 to 3, wherein the determining operation comprises comparing at least a portion of the extracted data to predetermined data.

5. A method as recited in claim 4, wherein the determining operation further comprises selecting the supplemental information based on a result of the comparing operation.

6. A method as recited in any of the preceding claims, wherein:
the supplemental information comprises a current service status of the prepaid mobile station, the current service status previously stored in a subscriber profile for a subscriber associated with the prepaid mobile station; and
the selecting operation comprises identifying the subscriber profile based on a result of the comparing operation.

7. A method as recited in any of the preceding claims, wherein the intercepted message is a subscriber data insertion message.

8. A method as recited in any of the preceding claims, wherein the supplemental service processing comprises determining based on the supplemental information whether to modify the intercepted message.

9. A method as recited in any of the preceding claims, wherein the supplemental service processing comprises determining based on the supplemental information whether to modify another message intercepted at the threshold point of the home location register.

10. A method as recited any of the preceding claims, wherein:
the intercepted message specifies a destination point and comprises original routing data for routing a mobile communication to or from a switching point serving the prepaid mobile station;
the supplemental service processing comprises modifying the intercepted message to replace the original routing data with new routing data selected based on the supplemental information and relaying the modified message toward the destination point.

11. A method as recited in any of the preceding claims, wherein the supplemental service processing comprises modifying another message intercepted to replace original routing data comprised therein with new routing data selected based on the supplemental information and relaying the modified other message toward a destination point of the other message, the original routing data indicating a routing instruction for routing a mobile communication to or from a switching point serving the prepaid mobile station.

12. A method as recited in any of the preceding claims, wherein the intercepted message is a location update message for registering the prepaid mobile station with a switching point to serve the prepaid mobile station.

13. A method as recited in any of the preceding claims, wherein the supplemental service processing comprises intercepting another message at the threshold point and modifying the other message to comprise substitute data selected based on the supplemental information.

14. A method as recited in any of the preceding claims, wherein the other message is one of a subscriber data insertion message, a routing instruction request message, a response message for a routing instruction request message, and a response message for a location update message.

15. A method as recited in any of the preceding claims, wherein the supplemental service processing comprises generating another message for carrying out a further service in addition to a service specified by the intercepted message.

16. A method as recited in any of the preceding claims, wherein:
the extracted data comprises an identifier associated with the prepaid mobile station;
the supplemental information comprises a subscriber profile for a mobile subscriber corresponding to the identifier; and
the determining operation comprises selecting the subscriber profile from plural stored subscriber profiles based on the extracted data.

17. A method as recited in any of the preceding claims, wherein the extracted data comprises data identifying a specified mobile network in which the prepaid mobile station has requested registration.

18. A method as recited in any of the preceding claims, wherein the supplemental information comprises a roaming status indicating whether the specified mobile station is roaming.

19. A method as recited in claim 18, wherein the supplemental service processing comprises determining whether a mobile communication is permitted for the prepaid mobile station in a mobile network specified by the extracted data, when the roaming status indicates that the mobile station is roaming.

20. A method as recited in any of the preceding claims, further comprising storing the supplemental information.

21. A method as recited in any of the preceding claims, wherein:
the prepaid mobile station is assigned to the home location register and is currently registered in a specified mobile network different from a home location network of the home location register;
the intercepted message is a routing request message relating to a mobile communication directed to the prepaid mobile station;
the extracted data comprises data identifying the prepaid mobile station;
the supplemental information comprises a permission status indicating whether the mobile communication is permitted for the prepaid mobile station in the specified mobile network, when a roaming status for the prepaid mobile station indicates the prepaid mobile station is roaming, and
the supplemental service processing comprises intercepting and modifying a response message corresponding to the routing request message when the permission status indicates the mobile communication is prohibited.

22. A method as recited in claim 21, wherein modifying the response message comprises replacing data for routing the mobile communication to the specified mobile network with data for routing the mobile communication to a mailbox service for the prepaid mobile station.

23. A method as recited in claim 22, wherein the mobile communication is a mobile voice telephony communication to the prepaid mobile station and the mailbox service is a voicemail service.

24. A method as recited in any of the preceding claims, wherein:
the intercepted message is a location update message for registering the prepaid mobile station with a switching point in a specified mobile network; and
the supplemental service processing comprises modifying a subscriber data insertion message, intercepted at the threshold point subsequent to interception of the location update message, to comprise subscriber data selected responsive to a result of comparing predetermined location information to information indicating a current location of the prepaid mobile station.

25. A method as recited in any of the preceding claims, wherein:
the intercepted message is a location update message for registering the prepaid mobile station with a switching point in a specified mobile network;
the extracted data comprises data identifying the serving switching point;
the supplemental information comprises a permission status indicating whether a mobile communication is permitted for the prepaid mobile station in the specified mobile network; and
the supplemental service processing comprises modifying a subscriber data insertion message, intercepted at the threshold point subsequent to interception of the location update message, to comprise subscriber data selected based on the permission status.

26. A method as recited in claim 25, wherein:
the permission status indicates a mobile communication is permitted for the prepaid mobile station in the specified mobile network; and
the selected subscriber data comprises data for routing the mobile communication to the prepaid mobile station through a specified gateway of the specified mobile network, whereby a service node coupled to the specified gateway can control a duration of the mobile communication in accordance with account information for the prepaid mobile station.

27. A method as recited in claim 25, wherein the specified mobile network is different from a home mobile network comprising the home location register.

28. A method as recited in claim 24, wherein the subscriber data comprises tariff data selected based on the comparison result.

29. A method as recited in any of the preceding claims, wherein:
the intercepted message is a location update message for registering the prepaid mobile station with a switching point in a specified mobile network;
the extracted data comprises data identifying a specified mobile network in which the prepaid mobile station is registering; and
the method further comprises
determining whether the prepaid mobile station has returned from a period of roaming based on a previously stored roaming status for the prepaid mobile station, when the specified mobile network is a home mobile network of the prepaid mobile station, and
controlling the prepaid mobile station to transmit service information to a service node of a home mobile network comprising the home location register, the service information relating to use of the prepaid mobile station in the period of roaming and having been collected by the prepaid mobile station in the period of roaming.

30. A method as recited in claim 29, wherein the transmitted service information comprises at least one of current prepaid account balance data and roaming communication history data for the prepaid mobile station.

31. A method as recited in claim 30, wherein the supplemental service processing comprises determining whether to relay the location update message to the home location register based on whether a roaming communication is permitted for the prepaid mobile station in the specified mobile network.

32. A method as recited in claim 31, wherein the supplemental service processing further comprises:
relaying the location update message to the home location register when the mobile communication is permitted for the prepaid mobile station in the specified mobile network; and
rejecting the location update message when the mobile communication is not permitted for the prepaid mobile station in the specified mobile network.

33. A method as recited in at least claim 18, further comprising:
intercepting at the threshold point a response message from the home location register responding to the location update message; and
relaying the response message to another signaling point.

34. A method as recited in at least claim 24, wherein the selected subscriber data comprises a selected routing number corresponding to a specified switching point, whereby a mobile communication originating from the prepaid mobile station is routed through the specified switching point by the specified mobile network.

35. A method as recited in claim 34, wherein the specified switching point is a gateway mobile switching center comprised in the specified mobile network.

36. A method as recited in at least claim 25, wherein the data identifying the prepaid mobile station comprises a mobile station identification number.

37. A method as recited in at least claim 3, wherein the current service status comprises a location status for the mobile station based on a location of a specified mobile network in which the mobile station is currently registered.

38. A method as recited in claim 37, wherein the location status of the mobile station is a roaming status indicating whether the mobile station is roaming when registered in the specified mobile network.

39. A method as recited in claim 37, wherein the current service status further comprises a permission status indicating whether a mobile communication is permitted for the prepaid mobile station when registered in the specified mobile network.

40. A mobile telecommunications service apparatus, comprising:
a signaling interface to intercept a message at a threshold point of a home location register and to extract data therefrom; and
service logic to determine supplemental information based on the extracted data and to perform supplemental service processing based on the supplemental information.

41. A mobile telecommunications service apparatus as recited in claim 40, wherein:
the home location register is comprised in a home mobile network of the prepaid mobile station; and
the threshold point is interposed between the home location register and a gateway switching point of the home mobile network.

42. A mobile telecommunications network, comprising:
a home location register; and
a signaling relay point, disposed at a threshold point of said home location register, to intercept a message to or from said home location register, to determine supplemental information based on data extracted from the message, and to perform supplemental service processing based on the supplemental information.

43. A mobile telecommunications network as recited in claim 42, wherein said signaling relay point comprises:
a signaling interface to intercept the message and to extract the data; and
service logic to receive the extracted data, to determine the supplemental information, and to perform the supplemental service processing.

44. A mobile telecommunications service method, comprising:
intercepting a message;
determining supplemental information based on data extracted from the message; and
performing supplemental service processing based on the supplemental information.

45. A computer readable medium encoded with a program for delivering a prepaid mobile telecommunications service, said program comprising instructions for:
determining supplemental information based on data extracted from a message intercepted at a threshold point of a home location register; and
performing service processing to carry out a mobile telecommunications service for a prepaid mobile station, the service processing comprising supplemental service processing based on the supplemental information.

46. A computer readable medium as recited in claim 45, wherein the instructions for determining supplemental information comprise instructions for comparing at least a portion of the extracted data to predetermined data.

47. A computer readable medium as recited in claim 45 or claim 46, the instructions for determining supplemental information comprise instructions for selecting the supplemental information based on a result of executing the comparing instructions.

48. A computer readable medium as recited in any of claims 45 to 47, wherein:
the supplemental information comprises a current service status of the prepaid mobile station, the current service status previously stored in a subscriber profile for a subscriber associated with the prepaid mobile station; and
the instructions for selecting the supplemental information comprise instructions for identifying the subscriber profile based on a result of executing the comparing instructions.

49. A computer readable medium as recited in any of claims 45 to 48, wherein the instructions for performing service processing comprise instructions for determining based on the supplemental information whether to modify the intercepted message.

50. A computer readable medium as recited in any of claims 45 to 49, wherein the instructions for performing service processing comprise instructions for determining based on the supplemental information whether to modify another message intercepted at the threshold point of the home location register.

51. A computer readable medium as recited in any of claims 45 to 50, wherein:
the intercepted message specifies a destination point and comprises original routing data for routing a mobile communication to or from a switching point serving the prepaid mobile station;
the instructions for performing service processing comprise instructions for modifying the intercepted message to replace the original routing data with new routing data selected based on the supplemental information and relaying the modified message toward the destination point.

52. A computer readable medium as recited in any of claims 45 to 51, wherein the instructions for performing service processing comprise instructions for intercepting another message at the threshold point and modifying the other message to comprise substitute data selected based on the supplemental information.

53. A computer readable medium as recited in any of claims 45 to 52, wherein the instructions for performing service processing comprise instructions for generating another message for carrying out a further service in addition to a service specified by the intercepted message.

54. A computer readable medium as recited in any of claims 45 to 53, wherein:
the extracted data comprises an identifier associated with the prepaid mobile station;
the supplemental information comprises a subscriber profile for a mobile subscriber corresponding to the identifier; and
the instructions for determining the supplemental information comprise instructions for selecting the subscriber profile from plural stored subscriber profiles based on the extracted data.

55. A prepaid mobile communication service method, comprising:
determining a roaming status for a prepaid mobile station based on data extracted from a message intercepted at a threshold point of a home location register; and
routing a mobile communication for the prepaid mobile station through a specified signaling point to a switching point serving the prepaid mobile station, when the roaming status indicates the prepaid mobile station is roaming.

56. A mobile subscriber prepaid service method, comprising:
routing a mobile communication for a prepaid mobile station through a specified signaling point to a switching point serving the prepaid mobile station, when a roaming status indicates the prepaid mobile station is roaming; and
releasing a connection for the mobile communication responsive to a determination that an account balance for the prepaid mobile station is less than a predetermined minimum balance value.

57. A method as recited in claim 56 wherein the release signal is a release message intercepted from the serving switching point at the threshold point of the home location register.

58. A method as recited in claim 56, wherein the predetermined minimum balance value is zero.

59. A method as recited in claim 56, wherein the specified signaling point is a gateway signaling point of a specified mobile network in which the prepaid mobile station is roaming.

60. A prepaid mobile communications service method, comprising:
extracting data from a message intercepted at a threshold point of a home location register, the intercepted message specifying a first service function comprised in carrying out a service for a prepaid mobile station; and
initiating a second service function based on the extracted data by processing another message intercepted at the threshold point.

61. A prepaid mobile communications service method, comprising:
intercepting a location update message from a visited mobile service center at a threshold point of a home location register in a home network of a prepaid mobile station, the location update message indicating a request from the prepaid mobile station for service registration at the visited mobile service center;
extracting identification data from the intercepted message, the identification data representing a unique identifier assigned to the prepaid mobile station;
extracting address data from the intercepted message, the address data indicating a message address for the visited mobile service center;
determining a roaming status for the prepaid mobile station based on the address data;
determining a service status based on the address data, the service status indicating whether service registration is permitted for the prepaid mobile station at the visited mobile service center;
intercepting a subscriber data insertion message directed to the visited mobile service center at the threshold of the home location register when service registration is permitted for the prepaid mobile station at the visited mobile service center and the roaming status indicates the prepaid mobile station is roaming while registered for service at the visited mobile service center;
modifying the subscriber data insertion message to include therein data indicating an instruction for the visited mobile service center to route mobile communications for the prepaid mobile station through a selected signaling point in the mobile network of the visited mobile service center when the subscriber data insertion message is intercepted, the selected signaling point executing a call control procedure responsive to call control instructions communicated from a prepaid accounting system in the home network;
intercepting a routing message from a gateway mobile service center at a threshold point of the home location register in the home network and extracting a called party number therefrom, the routing message indicating a request for a routing instruction for routing an incoming mobile communication to the prepaid mobile station;
determining based on the called party number and the service status whether the mobile communication is permitted for the prepaid mobile station;
relaying the intercepted routing message to the home location register;
intercepting an acknowledgement message responsive to the routing message at a threshold of the home location register when the mobile communication is not permitted for the prepaid mobile station, the acknowledgement message returning to the gateway mobile service center from the home location register and containing a mobile station routing number currently assigned by a currently serving mobile switching center to the prepaid mobile station;
modifying the intercepted acknowledgement message to replace the mobile station routing number with a selected routing number for a selected one of a voicemail service system for a subscriber corresponding to the prepaid mobile station and an interactive voice response system providing an error message, when the mobile communication is not permitted for the prepaid mobile station;
relaying the acknowledgement message to the gateway mobile service center when the acknowledgement message has been intercepted and the mobile station routing number has been replaced with the selected routing number; and
returning the acknowledgement message to the gateway mobile switching center without modification to the mobile station routing number, when the mobile communication is permitted for the prepaid mobile station.

62. A prepaid mobile communications service method, comprising:
intercepting a location update message from a visited mobile service center at a threshold point of a home location register in a home network of a prepaid mobile station, the location update message indicating a request from the prepaid mobile station for service registration at the visited mobile service center;
extracting identification data from the intercepted message, the identification data representing a unique identifier assigned to the prepaid mobile station;
extracting address data from the intercepted message, the address data indicating a message address for the visited mobile service center;
determining a roaming status for the prepaid mobile station based on the address data;
determining a service status based on the address data, the service status indicating whether service registration is permitted for the prepaid mobile station at the visited mobile service center;
intercepting a subscriber data insertion message directed to the visited mobile service center at the threshold of the home location register when service registration is permitted for the prepaid mobile station at the visited mobile service center and the roaming status indicates the prepaid mobile station is roaming while registered for service at the visited mobile service center;
modifying the subscriber data insertion message to include therein data indicating an instruction for the visited mobile service center to route mobile communications for the prepaid mobile station through a selected signaling point in the mobile network of the visited mobile service center when the subscriber data insertion message is intercepted, the selected signaling point executing a call control procedure responsive to call control instructions communicated from a prepaid accounting system in the home network;
receiving at the prepaid accounting system a communication from the selected signaling point indicating the prepaid mobile station has requested to initiate a mobile communication;
determining whether the requested mobile communication is permitted based on an account balance corresponding to the prepaid mobile station;
establishing a communication through a data network connection between the prepaid accounting system and the specified signaling point responsive to the received communication, when the requested mobile communication is permitted; and
instructing the specified signaling point through the data network communication to terminate the requested mobile station when the prepaid accounting system determines that the account balance has been reduced to less than a predetermined minimum balance amount.
